(19) Europäisches Patentamt
European Patent Office
Office européen des brevets

(11) EP 4 347 685 B1

(12) **EUROPÄISCHE PATENTSCHRIFT**

(45) Veröffentlichungstag und Bekanntmachung des Hinweises auf die Patenterteilung:
**14.05.2025 Patentblatt 2025/20**

(21) Anmeldenummer: **22729530.0**

(22) Anmeldetag: **16.05.2022**

(51) Internationale Patentklassifikation (IPC):
***C08G 59/02*** *(2006.01)* ***C08G 65/26*** *(2006.01)*

(52) Gemeinsame Patentklassifikation (CPC):
**C08G 59/027; C08G 65/2624**

(86) Internationale Anmeldenummer:
**PCT/EP2022/063156**

(87) Internationale Veröffentlichungsnummer:
**WO 2022/248267 (01.12.2022 Gazette 2022/48)**

(54) **HYDRIERTE POLYETHERMODIFIZIERTE AMINOFUNKTIONELLE POLYBUTADIENE UND VERFAHREN ZU DEREN HERSTELLUNG**

HYDROGENATED POLYETHER-MODIFIED AMINOFUNCTIONAL POLYBUTADIENES AND METHOD FOR PRODUCING THE SAME

POLYBUTADIÈNES AMINO-FONCTIONNELS HYDROGÉNÉS MODIFIÉS PAR POLYÉTHER ET SON PROCÉDÉ DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.05.2021 EP 21176124**

(43) Veröffentlichungstag der Anmeldung:
**10.04.2024 Patentblatt 2024/15**

(73) Patentinhaber: **Evonik Operations GmbH**
**45128 Essen (DE)**

(72) Erfinder:
- **LOBERT, Matthias**
**45309 Essen (DE)**
- **SCHUBERT, Frank**
**47506 Neukirchen-Vluyn (DE)**
- **URBAN, Michael**
**45327 Essen (DE)**
- **OTTO, Sarah**
**45128 Essen (DE)**
- **HENNING, Frauke**
**45259 Essen (DE)**

(74) Vertreter: **Evonik Patent Association**
**c/o Evonik Industries AG**
**IP Management**
**Postcode 84/339**
**Rodenbacher Chaussee 4**
**63457 Hanau (DE)**

(56) Entgegenhaltungen:
- **QING GAO ET AL: "Facile Synthesis of Amphiphilic Heterografted Copolymers with Crystalline and Amorphous Side Chains", MACROMOLECULAR CHEMISTRY AND PHYSICS,, vol. 214, no. 15, 1 January 2013 (2013-01-01), pages 1677 - 1687, XP002799119, DOI: 10.1002/MACP.201300255**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 347 685 B1

## Beschreibung

Die Erfindung betrifft ein Verfahren zur Herstellung von hydrierten polyethermodifizierten aminofunktionellen Polybutadienen sowie gemäß diesem Verfahren herstellbare hydrierte polyethermodifizierte aminofunktionelle Polybutadiene.

Polybutadiene mit seitständigen Polyetherresten sind bekannt und werden nach dem Stand der Technik beispielsweise durch eine Umsetzung von reaktiven, funktionalisierten Polybutadienen mit Polyethern hergestellt. So beschreiben Q. Gao et. al. in Macromolecular Chemistry and Physics (2013), 214(15), 1677-1687 amphiphile Polymer-Kammstrukturen, die durch Graften (Pfropfen) von Polyethylenglycol an eine Polybutadien-Hauptkette hergestellt werden. Gemäß JP 2011038003 werden mit Maleinsäureanhydrid-Einheiten funktionalisierte Polybutadiene mit aminoterminierten Polyethern umgesetzt. Es entstehen maleinisierte Polybutadiene mit kammständigen Polyetherresten, welche über eine Amid- oder ImidGruppe angebunden sind. In einem ähnlichen Verfahren werden gemäß J. Wang, Journal of Applied Polymer Science (2013), 128(4), 2408-2413 Polyethylenglycole unter Ausbildung einer Ester-Verknüpfung an Polybutadiene mit hohem Anteil an 1,2-Butadien-Monomereinheiten addiert. Hochmolekulare Graftpolymere mit Kammstruktur werden nach dem in JP 2002105209 offenbarten Verfahren durch eine Addition von epoxidierten Polybutadienen mit OH-funktionellen Polyethern erhalten. H. Decher et. al. nutzen gemäß Polymer International (1995), 38(3), 219-225 die Addition von Isocyanat-terminierten Polyethylenglycolen an hydroxyfunktionelle Polybutadiene.

Weiterhin sind Verfahren zur Herstellung von polyethermodifizierten Polybutadienen bekannt, bei denen hydroxyfunktionelle Polybutadiene mit Epoxidverbindungen umgesetzt werden. So ist aus dem Stand der Technik beispielsweise die Alkoxylierung von OH-terminierten Polybutadienen bekannt.

US 4994621 A beschreibt beispielsweise die Alkoxylierung von hydroxyterminierten Polybutadienen mit Ethylenoxid und Propylenoxid in Gegenwart von Tetramethylammoniumhydroxid. Die Verwendung hydroxyterminierter Polybutadiene in der Alkoxylierung führt ausschließlich zu Polyether-Polybutadien-Polyether-Triblockstrukturen. Dieser Blockaufbau ist laut EP 2003156 A1 verantwortlich für die schlechte Mischbarkeit mit anderen Reaktionskomponenten bei der Herstellung von Polyurethanen.

Neben der Alkoxylierung von hydroxyterminierten Polybutadienen ist auch die Alkoxylierung von seitständig hydroxyfunktionellen Polybutadienen bekannt. So beschreiben Q. Gao et. al. in Macromolecular Chemistry and Physics (2013), 214(15), 1677-1687 die Herstellung eines seitständig polyethermodifizierten Polybutadiens durch Alkoxylierung eines seitständig hydroxyfunktionellen Polybutadiens mit Ethylenoxid. Die Herstellung des dabei eingesetzten seitständig hydroxyfunktionellen Polybutadiens erfolgt zunächst durch Epoxidierung eines Polybutadiens, anschließender Umsetzung des epoxidierten Polybutadiens mit einer Lithium-Polybutadien-Verbindung und schließlich Protonierung des Reaktionsprodukts mit HClsaurem Methanol. Dieses Verfahren führt zu einem Polybutadien mit sowohl seitständigen Polyetherresten als auch seitständigen Polybutadienresten.

Die chemische Modifizierung von Polybutadienen mit Hilfe der Epoxidierung und anschließender Epoxidringöffnung durch Reaktion mit Aminen ist bekannt. JP 63288295 offenbart die Umsetzung von epoxyfunktionellen Polybutadienen mit Dimethylamin sowie die anschließende Protonierung der Aminfunktionen mit Essigsäure. Das Verfahren gemäß JP 57205596 umfasst neben der Epoxidringöffnung mit Dimethylamin die weitere Quaternisierung der Aminfunktionen mit Epichlorhydrin. Ein Verfahren zur Epoxidringöffnung hydrierter Polybutadiene mit Aminen ist in DE 2554093 offenbart. DE 2943879, DE 2732736 und JP 49055733 beschreiben die Addition von Diethanolamin. JP 48051989 beschreibt ebenfalls die Addition von Diethanolamin, gefolgt von einer Vernetzungsreaktion in Gegenwart von Dibenzoylperoxid. JP 53117030, DE 2734413 und DE 2943879 beschreiben die Addition von Ethanolamin, JP 05117556 die Umsetzung mit Diisopropanolamin, EP 0351135, EP 0274389 sowie DE 3305964 die Umsetzung der Epoxidgruppen mit Dimethylamin. DD 296286 offenbart die Addition von primären und sekundären Aminen mit 4 bis 20 C-Atomen an epoxidierte Polybutadiene in polaren Lösemitteln. Eine weitere Alkoxylierung der aminofunktionellen Polybutadiene wird in keiner dieser Schriften offenbart.

Polybutadiene und modifizierte Polybutadiene werden vielfach als Reaktivkomponente oder Formulierungsbestandteil eingesetzt, um z.B. Polymere hydrophob auszustatten oder zu flexibilisieren und die mechanischen Eigenschaften zu verbessern. Den Einsatzmöglichkeiten polyethermodifizierter Polybutadiene sind derzeit jedoch durch die Beschränkung auf wenige verfügbare Triblockstrukturen häufig Grenzen gesetzt. Es fehlt bisher die Möglichkeit, den chemischen Aufbau der polyethermodifizierten Polybutadiene in weiten Grenzen zu variieren. Zudem gibt es kein einfaches Herstellverfahren für solche Polymere.

Die Hydrierung von ungesättigten Verbindungen im generellen und ungesättigten Polymeren wie Polybutadien-Polymeren oder Polybutadien-Isopren-Copolymeren im speziellen sind prinzipiell bekannt und können sowohl mit heterogenen als auch homogenen Katalysatoren durchgeführt werden.

Dem Fachmann geläufige Hydrierkatalysatoren sind beispielsweise vom Nickel-Typ, wie beispielsweise Raney-Nickel oder auch Palladium. Während Nickel-katalysierte Reaktionen sich meist durch eine geringe Reaktionsgeschwindigkeit auszeichnen, so erfolgt mittels Palladium-Katalyse meist eine deutlich schnellere Umsetzung.

So beschreibt DE 2459115 A1 beispielsweise die Hydrierung von Polybutadienen in Anwesenheit von geträgerten Ruthenium-Katalysatoren und DE 1248301 B die Verwendung von Cobalt-, Nickel-, Mangan-, Molybdän- und Wolfram-Verbindungen, die mittels Aluminium-Reduktionsmitteln auf inerte Trägermaterialien aufgebracht werden, als effiziente heterogene Hydrierkatalysatoren. DE 2457646 A1 beschreibt zudem einen effizienten Hydrierkatalysator auf Cobalt-Basis, hergestellt aus Co(II)-chlorid durch reduzierende Umsetzung mit Lithium-, Natrium- oder Kaliumsalzen eines Lactams.

Des Weiteren werden in DE 2637767 A1 auch Triphenylphosphin-Salze von Rhodium (Wilkinson-Katalysator), Iridium und Ruthenium als selektive Katalysatoren zur Hydrierung der 1,2-Vinyl-Anteile des Polybutadienpolymers beschrieben. Der Wilkinson-Katalysator wird darüber hinaus in EP 0279766 A1 auch vorteilhaft als Polymer-gebundener Katalysator eingesetzt.

In EP 0545844 A1 wird als homogener Katalysator ein Titanocen-Katalysator beschrieben, der durch *in situ* Reduktion mit metallorganischen Verbindungen in seine aktive Form überführt wird.

Aus dem Stand der Technik sind aber keine hydrierten polyethermodifizierten Polybutadiene und entsprechend auch keine Verfahren zu deren Herstellung bekannt.

Aufgabe der vorliegenden Erfindung war es daher, hydrierte polyethermodifizierte Polybutadiene bereitzustellen.

Es bestand insbesondere die Aufgabe, ein Verfahren zur Herstellung von vorzugsweise linearen hydrierten Polybutadienen, die kammständig (seitständig, seitenständig) über eine Aminogruppe mit Polyetherresten modifiziert sind, bereitzustellen.

Überraschenderweise wurde nun gefunden, dass ein Verfahren zur Herstellung von hydrierten polyethermodifizierten aminofunktionellen Polybutadienen diese Aufgabe löst, welches die folgenden Schritte umfasst:

a) Umsetzung mindestens eines Polybutadiens (A) mit mindestens einem Epoxidierungsreagenz (B) zu mindestens einem epoxyfunktionellen Polybutadien (C);
b) Umsetzung des mindestens einen epoxyfunktionellen Polybutadiens (C) mit mindestens einer aminofunktionellen Verbindung (D) zu mindestens einem hydroxy- und aminofunktionellen Polybutadien (E);
c) Umsetzung des mindestens einen hydroxy- und aminofunktionellen Polybutadiens (E) mit mindestens einer epoxyfunktionellen Verbindung (F) zu mindestens einem polyethermodifizierten aminofunktionellen Polybutadien (G);
d) Hydrierung des mindestens einen polyethermodifizierten aminofunktionellen Polybutadiens (G) zu mindestens einem hydrierten polyethermodifizierten aminofunktionellen Polybutadien (H).

Weitere Gegenstände der Erfindung und ihre vorteilhaften Ausführungsformen sind den Ansprüchen, den Beispielen und der Beschreibung zu entnehmen.

Die erfindungsgemäßen Gegenstände werden nachfolgend beispielhaft beschrieben, ohne dass die Erfindung auf diese beispielhaften Ausführungsformern beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Werden nachfolgend Mittelwerte angegeben, so handelt es sich, wenn nicht anders angegeben, um Zahlenmittel. Werden nachfolgend Messwerte, Parameter oder Stoffeigenschaften angegeben, die durch Messung bestimmt werden, so handelt es sich, wenn nicht anders angegeben, um Messwerte, Parameter oder Stoffeigenschaften gemessen bei 25 °C sowie vorzugsweise bei einem Druck von 101325 Pa (Normaldruck).

Die zahlenmittlere Molmasse $M_n$, die gewichtsmittlere Molmasse $M_w$ und die Polydispersität ($M_w/M_n$) werden im Rahmen der vorliegenden Erfindung vorzugsweise mittels Gel-Permeations-Chromatographie (GPC) bestimmt, wie in den Beispielen beschrieben, sofern nicht explizit anders angegeben.

Werden nachfolgend Zahlenbereiche in der Form "X bis Y" angegeben, wobei X und Y die Grenzen des Zahlenbereichs darstellen, so ist dies gleichbedeutend mit der Angabe "von mindestens X bis einschließlich Y", sofern nicht anders angegeben. Bereichsangaben schließen die Bereichsgrenzen X und Y also mit ein, sofern nicht anders angegeben.

Die Begriffe "seitständig", "seitenständig" und "kammständig" werden synonym verwendet.

Wo immer Moleküle bzw. Molekülfragmente ein oder mehrere Stereozentren aufweisen oder aufgrund von Symmetrien in Isomere unterschieden werden können oder aufgrund anderer Effekte, wie zum Beispiel eingeschränkter Rotation, in Isomere unterschieden werden können, sind alle möglichen Isomere von der vorliegenden Erfindung miteingeschlossen.

Die nachfolgenden Formeln beschreiben Verbindungen oder Reste, die aus sich ggf. wiederholenden Einheiten (Wiederholungseinheiten) aufgebaut sind, wie beispielsweise sich wiederholende Fragmente, Blöcke oder Monomereinheiten, und eine Molgewichtsverteilung aufweisen können. Die Häufigkeit der Einheiten wird durch Indizes angegeben, sofern nicht explizit anders angegeben. Die in den Formeln verwendeten Indizes sind als statistische Mittelwerte (Zahlenmittel) zu betrachten, sofern nicht explizit anders angegeben. Die verwendeten Indexzahlen sowie die Wertebereiche der angegebenen Indizes werden als Mittelwerte der möglichen statistischen Verteilung der tatsächlichen vorhandenen Strukturen und/oder deren Mischungen verstanden, sofern nicht explizit anders angegeben. Die verschiedenen Fragmente bzw. Einheiten der in den nachfolgenden Formeln beschriebenen Verbindungen können statistisch verteilt sein. Statistische Verteilungen sind blockweise aufgebaut mit einer beliebigen Anzahl an Blöcken und einer beliebigen Sequenz oder unterliegen einer randomisierten Verteilung, sie können auch alternierend aufgebaut sein, oder auch über die Kette, sofern eine solche vorliegt, einen Gradienten bilden, insbesondere können sie auch alle Mischformen bilden, bei denen gegebenenfalls Gruppen unterschiedlicher Verteilungen aufeinander folgen können. In den nachfolgenden Formeln sind alle Permutationen von Einheiten mitumfasst. Werden also im Rahmen der vorliegenden Erfindung Verbindungen, wie z.B. Polybutadiene (A), epoxyfunktionelle Polybutadiene (C), hydroxy- und aminofunktionelle Polybutadiene (E), polyethermodifizierte aminofunktionelle Polybutadiene (G) oder hydrierte polyethermodifizierte aminofunktionelle Polybutadiene (H) beschrieben, die verschiedene Einheiten mehrfach aufweisen können, so können diese sowohl ungeordnet, z.B. statistisch verteilt, oder geordnet in diesen Verbindungen vorkommen. Die Angaben zur Anzahl bzw. relativen Häufigkeit von Einheiten in solchen Verbindungen sind als Mittelwert (Zahlenmittel), gemittelt über alle entsprechenden Verbindungen, zu verstehen. Spezielle Ausführungen können dazu führen, dass die statistischen Verteilungen durch die Ausführungsform Beschränkungen erfahren. Für alle Bereiche, die nicht von der Beschränkung betroffen sind, ändert sich die statistische Verteilung nicht.

Ein erster Gegenstand der Erfindung ist somit ein Verfahren zur Herstellung von einem oder mehreren hydrierten polyethermodifizierten aminofunktionellen Polybutadienen, umfassend die Schritte:

a) Umsetzung mindestens eines Polybutadiens (A) mit mindestens einem Epoxidierungsreagenz (B) zu mindestens einem epoxyfunktionellen Polybutadien (C);
b) Umsetzung des mindestens einen epoxyfunktionellen Polybutadiens (C) mit mindestens einer aminofunktionellen Verbindung (D) zu mindestens einem hydroxy- und aminofunktionellen Polybutadien (E);
c) Umsetzung des mindestens einen hydroxy- und aminofunktionellen Polybutadiens (E) mit mindestens einer epoxyfunktionellen Verbindung (F) zu mindestens einem polyethermodifizierten aminofunktionellen Polybutadien (G);
d) Hydrierung des mindestens einen polyethermodifizierten aminofunktionellen Polybutadiens (G) zu mindestens einem hydrierten aminofunktionellen polyethermodifizierten Polybutadien (H).

Es ist bevorzugt, dass das erfindungsgemäße Verfahren außerdem genau einen der folgenden beiden optionalen Schritte cc) und dd) umfasst:

cc) Umsetzung mindestens eines polyethermodifizierten aminofunktionellen Polybutadiens (G) ohne endverkappte Polyetherreste mit mindestens einem Endverkappungsreagenz (I) zu mindestens einem polyethermodifizierten aminofunktionellen Polybutadien (G) enthaltend endverkappte Polyetherreste;
dd) Umsetzung mindestens eines hydrierten aminofunktionellen polyethermodifizierten Polybutadiens (H) ohne endverkappte Polyetherreste mit mindestens einem Endverkappungsreagenz (I) zu mindestens einem hydrierten polyethermodifizierten aminofunktionellen Polybutadien (H) enthaltend endverkappte Polyetherreste.

Es ist also bevorzugt, dass das erfindungsgemäße Verfahren entweder Schritt cc) oder Schritt dd) oder keinen dieser beiden Schritte umfasst.

Das polyethermodifizierte aminofunktionelle Polybutadien (G) ohne endverkappte Polyetherreste wird im Folgenden auch mit (G1) bezeichnet. Das polyethermodifizierte aminofunktionelle Polybutadien (G) enthaltend endverkappte Polyetherreste wird im Folgenden auch mit (G2) bezeichnet. Sowohl (G1) also auch (G2) sind polyethermodifizierte aminofunktionelle Polybutadiene (G).

Das hydrierte polyethermodifizierte aminofunktionelle Polybutadien (H) ohne endverkappte Polyetherreste wird im Folgenden auch mit (H1) bezeichnet. Das hydrierte polyethermodifizierte aminofunktionelle Polybutadien (H) enthaltend endverkappte Polyetherreste wird im Folgenden auch mit (H2) bezeichnet. Sowohl (H1) also auch (H2) sind hydrierte polyethermodifizierte aminofunktionelle Polybutadiene (H).

Es ist bevorzugt, dass das erfindungsgemäße Verfahren außerdem mindestens einen der folgenden Schritte umfasst:

e) Farbaufhellung des mindestens einen hydrierten polyethermodifizierten aminofunktionellen Polybutadiens (H);
f) Umsetzung zumindest eines Teils der Aminogruppen des mindestens einen hydrierten polyethermodifizierten aminofunktionellen Polybutadiens (H) zu quartären Ammoniumgruppen mittels einer Säure und/oder eines Quaternisierungsreagenz.

Die Schritte a), b), c), cc) d), dd), e) und f) erfolgen in der angegebenen Reihenfolge, also in der Reihenfolge a), b), c), cc) d), dd), e), f), wobei einer oder mehrere der Schritte cc), dd), e) und f) optional sind und ausgelassen werden können, wobei entweder der Schritt cc) oder der Schritt dd) oder keiner dieser beiden Schritte umfasst sind. Die Schritte können unmittelbar aufeinander folgen. Das Verfahren kann aber auch weitere vorgelagerte Schritte, Zwischenschritte oder nachgelagerte Schritte, wie zum Beispiel eine Aufreinigung der Edukte, der Zwischenprodukte und/oder der Endprodukte, aufweisen.

Die aus den epoxyfunktionellen Polybutadienen (C) durch Epoxidringöffnung mit Aminen hergestellten Polybutadiene (E) sind dadurch gekennzeichnet, dass sie seitständig sowohl Aminogruppen als auch Hydroxygruppen aufweisen. Je nach Reaktionsbedingungen im Schritt c) geschieht die Addition der epoxyfunktionellen Verbindungen (F) an den Aminogruppen, an den Hydroxygruppen oder vorzugsweise an beiden reaktiven Gruppen.

Durch das erfindungsgemäße Verfahren wird es erstmalig möglich, hydrierte polyethermodifizierte Polybutadiene zu erhalten, insbesondere lineare hydrierte Polybutadiene mit kammständigen Polyetherresten. Die Kettenlänge und Monomerabfolge im Polyetherrest kann in weiten Bereichen variiert werden. Die mittlere Anzahl der ans Polybutadien gebundenen Polyetherreste ist gezielt über den Grad der Epoxidierung und die Funktionalisierung mit Amino- und Hydroxygruppen einstellbar und eröffnet eine große strukturelle Vielfalt bei den hydrierten polyethermodifizierten aminofunktionellen Polybutadienen (H).

Die erfindungsgemäß erhältlichen hydrierten aminofunktionellen Polybutadiene mit kammständigen Polyetherresten sind vorzugsweise im Wesentlichen frei von restlichen Epoxidgruppen. Das erfindungsgemäße Verfahrensprodukt enthält vorzugsweise im Wesentlichen keine freien Polyetheranteile. Vorzugsweise sind im Wesentlichen die Polyether chemisch über ein Stickstoffatom und/oder über ein Sauerstoffatom an das (hydrierte) Polybutadien angebunden.

Es ist dabei bevorzugt, während des erfindungsgemäßen Verfahrens zur Stabilisierung der Edukte, Intermediate und Produkte, Stabilisatoren bzw. Antioxidantien zu verwenden, um ungewollte Polymerisationsreaktionen der Doppelbindungen zu vermeiden. Hierfür eignen sich z.B. die dem Fachmann bekannten sterisch gehinderten Phenole, kommerziell erhältlich zum Beispiel als Anox® 20, Irganox® 1010 (BASF), Irganox® 1076 (BASF) und Irganox® 1135 (BASF).

Es ist ferner bevorzugt, einen oder mehrere oder alle Verfahrensschritte unter einer Inertatmosphäre, z.B. unter Stickstoff, durchzuführen. Auch ist es bevorzugt, dass das Edukt (A), wie auch die Zwischenprodukte (C), (E) und (G), sowie das Endprodukt (H), falls es nicht vollständig, sondern nur teilhydriert ist, möglichst unter Ausschluss von Luft aufzubewahren.

**Schritt a)**

Im Schritt a) des erfindungsgemäßen Verfahrens erfolgt die Umsetzung mindestens eines Polybutadiens (A) mit mindestens einem Epoxidierungsreagenz (B) zu mindestens einem epoxyfunktionellen Polybutadien (C).

Bei dieser Umsetzung werden Doppelbindungen des Polybutadiens (A) in Epoxidgruppen überführt. Verschiedene Methoden zur Epoxidierung von Polybutadienen mit z.B. Percarbonsäuren und Wasserstoffperoxid sind dem Fachmann bekannt und z.B. in CN 101538338, JP 2004346310, DD 253627 and WO 2016/142249 A1 offenbart. Besonders geeignet zur Herstellung der epoxyfunktionellen Polybutadiene (C) mit hohem Anteil an 1,4-Einheiten ist Perameisensäure, die auch *in situ* aus Ameisensäure in Gegenwart von Wasserstoffperoxid gebildet werden kann. Die Epoxidierung findet bevorzugt in einem Lösemittel wie Toluol oder Chloroform statt, das nach der Umsetzung und dem Auswaschen von evtl. Peroxidresten destillativ entfernt wird.

Die Polybutadiene (A) sind Polymere des Buta-1,3-diens. Die Polymerisation der Buta-1,3-dien-Monomere erfolgt dabei im Wesentlichen unter 1,4- und/oder 1,2-Verknüpfung. Eine 1,4-Verknüpfung führt zu sogenannten 1,4-trans-Einheiten und/oder 1,4-cis-Einheiten, die zusammengefasst auch als 1,4-Einheiten bezeichnet werden. Eine 1,2-Verknüpfung führt zu sogenannten 1,2-Einheiten. Die 1,2-Einheiten tragen eine Vinylgruppe und werden auch als vinylische 1,2-Einheiten bezeichnet. Die 1,2-Einheiten werden im Rahmen der vorliegenden Erfindung auch mit "(X)", die 1,4-trans-Einheiten mit "(Y)" und die *1,4-cis*-Einheiten mit "(Z)" bezeichnet:

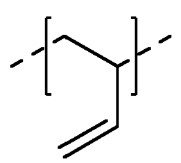

1,2-Einheit (X)

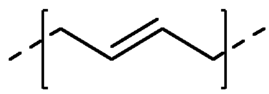

*1,4-trans*-Einheit (Y)

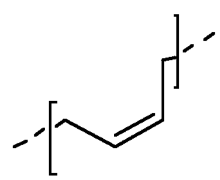

*1,4-cis*-Einheit (Z)

Die in den Einheiten enthaltenen Doppelbindungen werden analog als 1,4-*trans*-Doppelbindungen, *1,4-cis*-

Doppelbindungen bzw. 1,2-Doppelbindungen oder 1,2-Vinyl-Doppelbindungen bezeichnet. Die *1,4-trans*-Doppelbindungen und 1,4-*cis*-Doppelbindungen werden zusammenfassend auch als 1,4-Doppelbindungen bezeichnet.

Es handelt sich bei den Polybutadienen (A) also um unmodifizierte Polybutadiene. Die Polybutadiene (A) und ihre Herstellverfahren sind dem Fachmann bekannt. Die Herstellung erfolgt vorzugsweise mittels einer radikalischen, einer anionischen oder einer koordinativen Kettenpolymerisation.

Die radikalische Kettenpolymerisation wird bevorzugt als Emulsionspolymerisation durchgeführt. Dies führt zu einem statistischen Auftreten der drei genannten Einheiten. Bei niedriger Reaktionstemperatur (ca. 5 °C) sinkt der Anteil an Vinylgruppen. Die Initiierung erfolgt vorzugsweise mit Kaliumperoxodisulfat und Eisensalzen oder auch mit Wasserstoffperoxid.

Bei der anionischen Kettenpolymerisation erfolgt die Initiierung der Kettenpolymerisation vorzugsweise mit Butyllithium. Das so erhaltene Polybutadien (A) enthält etwa 40 % 1,4-*cis*-Einheiten und 50 % 1,4-*trans*-Einheiten.

Bei der koordinativen Kettenpolymerisation werden vorzugsweise Ziegler-Natta-Katalysatoren eingesetzt, insbesondere stereospezifische Ziegler-Natta-Katalysatoren, die zu einem Polybutadien (A) mit einem hohen Anteil an 1,4-*cis*-Einheiten führen.

Bei der Polymerisation von 1,3-Butadien können durch Neben- oder Folgereaktionen, wie z.B. einer Folgereaktion der Doppelbindungen der resultierenden 1,2- und 1,4-Einheiten des Polybutadiens, auch verzweigte Polybutadiene (A) entstehen. Bevorzugt handelt es sich bei den erfindungsgemäß eingesetzten Polybutadienen (A) aber um lineare, also unverzweigte Polybutadiene. Es ist auch möglich, dass die Polybutadiene in geringen Anteilen andere Einheiten als 1,2-Einheiten, 1,4-*trans*-Einheiten oder *1,4-cis*-Einheiten aufweisen. Es ist aber bevorzugt, dass der Massenanteil der Summe von 1,2-Einheiten, 1,4-*trans*-Einheiten und 1,4-*cis*-Einheiten mindestens 80 %, vorzugweise mindestens 90 %, insbesondere mindestens 99% bezogen auf die Gesamtmasse des mindestens einen Polybutadiens (A), also bezogen auf die Gesamtmasse aller eingesetzten Polybutadiene (A), beträgt.

Für das erfindungsgemäße Verfahren werden vorzugsweise solche Polybutadiene (A) verwendet, die 0 % bis 80 % 1,2-Einheiten und 20 % bis 100 % 1,4-Einheiten, bevorzugter 0 % bis 30 % 1,2-Einheiten und 70 % bis 100 % 1,4-Einheiten, noch bevorzugter 0 % bis 10 % 1,2-Einheiten und 90 % bis 100 % 1,4-Einheiten, und am bevorzugtesten 0 % bis 5 % 1,2-Einheiten und 95 % bis 100 % 1,4-Einheiten bezogen auf die Summe aus 1,2-Einheiten und 1,4-Einheiten aufweisen.

Es ist also bevorzugt, dass von den Doppelbindungen aller eingesetzten Polybutadiene (A) 0 % bis 80 % 1,2-Vinyl-Doppelbindungen und 20 % bis 100 % 1,4-Doppelbindungen, bevorzugter 0 % bis 30 % 1,2-Vinyl-Doppelbindungen und 70 % bis 100 % 1,4-Doppelbindungen, noch bevorzugter 0 % bis 10 % 1,2-Vinyl-Doppelbindungen und 90 % bis 100 % 1,4-Doppelbindungen, am bevorzugtesten 0 % bis 5 % 1,2-Vinyl-Doppelbindungen und 95 % bis 100 % 1,4-Doppelbindungen sind.

Für die erfindungsgemäße Herstellung der Produkte werden entsprechend vorzugsweise Polybutadiene (A) der Formel (1)

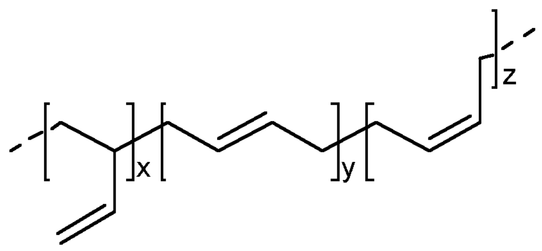

Formel (1)

mit einem Gehalt von 0 % bis 80 % 1,2-Vinyl-Doppelbindungen (Index x) und 20 % bis 100 % 1,4-Doppelbindungen, bevorzugter 0 % bis 30 % 1,2-Vinyl-Doppelbindungen und 70 % bis 100 % 1,4-Doppelbindungen, noch bevorzugter mit 0 % bis 10 % 1,2-Vinyl-Doppelbindungen und 90 % bis 100 % 1,4-Doppelbindungen, am bevorzugtesten mit 0 % bis 5 % 1,2-Vinyl-Doppelbindungen und 95 % bis 100 % 1,4-Doppelbindungen verwendet. Das Verhältnis von 1,4-*trans*-Doppelbindungen (Index y) und *1,4-cis*-Doppelbindungen (Index z) ist beliebig.

Die Indizes x, y und z geben dabei die Anzahl der jeweiligen Butadien-Einheit im Polybutadien (A) wieder. Es handelt sich dabei um numerische Mittelwerte (Zahlenmittel) über die Gesamtheit aller Polybutadienpolymere des mindestens einen Polybutadiens (A).

Die mittlere Molmasse und Polydispersität der verwendeten Polybutadiene (A) nach Formel (1) ist beliebig.

Es ist bevorzugt, dass die zahlenmittlere Molmasse $M_n$ des mindestens einen Polybutadiens (A) von 200 g/mol bis 20000 g/mol, bevorzugter von 500 g/mol bis 10000 g/mol, am bevorzugtesten von 700 g/mol bis 5000 g/mol beträgt.

Alternativ ist es bevorzugt, dass die zahlenmittlere Molmasse $M_n$ des mindestens einen Polybutadiens (A) von

2100 g/mol bis 20000 g/mol, bevorzugter von 2200 g/mol bis 10000 g/mol, am bevorzugtesten von 2300 g/mol bis 5000 g/mol beträgt.

Es ist weiterhin bevorzugt, dass das mindestens eine Polybutadien (A) im Zahlenmittel 5 bis 360, bevorzugter 10 bis 180, am bevorzugtesten 15 bis 90 Einheiten ausgewählt aus der Gruppe bestehend aus 1,2-Einheiten, 1,4-*cis*-Einheiten und 1,4-*trans*-Einheiten aufweist.

Alternativ ist es bevorzugt, dass das mindestens eine Polybutadien (A) im Zahlenmittel 35 bis 360, bevorzugter 40 bis 180, am bevorzugtesten 45 bis 90 Einheiten ausgewählt aus der Gruppe bestehend aus 1,2-Einheiten, 1,4-*cis*-Einheiten und 1,4-*trans*-Einheiten aufweist.

Es ist weiterhin bevorzugt, dass die Viskosität der verwendeten Polybutadiene (A) 50 bis 50000 mPas bevorzugter 100 bis 10000 mPas, am bevorzugtesten 500 bis 5000 mPas beträgt (bestimmt gemäß DIN EN ISO 3219:1994-10).

Am bevorzugtesten eingesetzte Polybutadiene sind die von Evonik Industries AG / Evonik Operations GmbH kommerziell erhältlichen Produkte Polyvest® 110 und Polyvest® 130 mit den folgenden typischen Kenndaten:

Polyvest® 110: ca. 1 % 1,2-Vinyl-Doppelbindungen, ca. 24 % 1,4-*trans*-Doppelbindungen, ca. 75 % *1,4-cis*-Doppelbindungen, zahlenmittlere Molmasse $M_n$ ca. 2600 g/mol, Viskosität (20 °C) 700-860 mPas (gemäß DIN EN ISO 3219:1994-10),
Polyvest® 130: ca. 1 % 1,2-Vinyl-Doppelbindungen, ca. 22 % 1,4-*trans*-Doppelbindungen, ca. 77 % *1,4-cis*-Doppelbindungen, zahlenmittlere Molmasse $M_n$ ca. 4600 g/mol, Viskosität (20 °C) 2700-3300 mPas (gemäß DIN EN ISO 3219:1994-10).

Am bevorzugtesten eingesetzte Polybutadiene sind weiterhin die von Synthomer PLC erhältlichen Produkte Lithene ultra AL und Lithene ActiV 50 mit den folgenden typischen Kenndaten:

Lithene ultra AL: ca. 40 % 1,2-Vinyl-Doppelbindungen, ca. 60 % 1,4- Doppelbindungen,
Lithene ActiV 50: ca. 70 % 1,2-Vinyl-Doppelbindungen, ca. 30% 1,4- Doppelbindungen.

Der Epoxidierungsgrad wird z.B. mit Hilfe der $^{13}C$-NMR-Spektroskopie oder der Epoxidzahl-Titration (Bestimmungen des Epoxid-Äquivalents gemäß DIN EN ISO 3001:1999) quantitativ bestimmt und kann über die Prozessbedingungen, insbesondere über die Einsatzmenge an Wasserstoffperoxid in Relation zur vorgelegten Menge an Doppelbindungen im Polybutadien, gezielt und reproduzierbar eingestellt werden.

Es ist bevorzugt, dass im Schritt a) des erfindungsgemäßen Verfahrens von >0 % bis <100 %, bevorzugter von >0 % bis 70 %, noch bevorzugter von 1 % bis 50 %, noch bevorzugter von 2 % bis 40 %, noch bevorzugter von 3 % bis 30 % und am bevorzugtesten von 4 % bis 20 % aller Doppelbindungen des mindestens einen Polybutadiens (A) epoxidiert werden.

Als Epoxidierungsreagenz (B) sind prinzipiell alle dem Fachmann bekannten Epoxidierungsmittel einsetzbar. Es ist bevorzugt, dass das Epoxidierungsreagenz (B) ausgewählt ist aus der Gruppe der Peroxycarbonsäuren (Percarbonsäuren, Persäuren), vorzugsweise aus der Gruppe bestehend aus *meta*-Chlorperbenzoesäure, Peroxyessigsäure (Peressigsäure) und Peroxyameisensäure (Perameisensäure), insbesondere Peroxyameisensäure (Perameisensäure). Die Peroxycarbonsäuren werden dabei vorzugsweise *in situ* aus der entsprechenden Carbonsäure und Wasserstoffperoxid gebildet.

Es ist am bevorzugtesten, dass das mindestens eine Epoxidierungsreagenz (B) Perameisensäure ist oder enthält, welche vorzugweise *in situ* aus Ameisensäure und Wasserstoffperoxid gebildet wird.

Die Epoxidierung des mindestens einen Polybutadiens (A) findet statistisch über die Polybutadienkette verteilt bevorzugt an den 1,4-Doppelbindungen statt. Eine Epoxidierung der 1,2-Doppelbindungen kann ebenfalls stattfinden und findet an diesen ebenfalls statistisch über die Polybutadienkette verteilt statt. Eine Epoxidierung der 1,2-Doppelbindungen ist aber gegenüber einer Epoxidierung der 1,4-Doppelbindungen benachteiligt. Das Reaktionsprodukt enthält somit epoxyfunktionelle Polybutadienpolymere, die sich in ihrem Epoxidierungsgrad voneinander unterscheiden. Alle angegebenen Epoxidierungsgrade sind daher als Mittelwerte zu verstehen.

**Schritt b)**

Im Schritt b) des erfindungsgemäßen Verfahrens erfolgt die Umsetzung des mindestens einen epoxyfunktionellen Polybutadiens (C) mit mindestens einer aminofunktionellen Verbindung (D) zu mindestens einem hydroxy- und aminofunktionellen Polybutadien (E).

Bei dieser Umsetzung findet eine Addition (Additionsreaktion) der mindestens einen aminofunktionellen Verbindung (D) an das mindestens eine epoxyfunktionelle Polybutadien (C) statt. Die Umsetzung erfolgt also unter Bildung von einer oder mehreren kovalenten Bindungen zwischen der mindestens einen aminofunktionellen Verbindung (D) und dem mindestens einen epoxyfunktionellen Polybutadien (C). Die Umsetzung umfasst vorzugsweise (zumindest idealisiert) einen Reaktionsschritt, bei dem ein nukleophiler Angriff mindestens einer Aminogruppe der mindestens einen

aminofunktionellen Verbindung (D) an mindestens eine Epoxygruppe des mindestens einen epoxyfunktionellen Polybutadiens (C) unter Ringöffnung dieser mindestens einen Epoxygruppe erfolgt.

Es ist bevorzugt, dass die mindestens eine aminofunktionelle Verbindung (D) ausgewählt ist aus Verbindungen mit mindestens einer primären und/oder mindestens einer sekundären Aminogruppe, da primäre und sekundäre Aminogruppen besonders einfach an die Epoxidgruppen des Polybutadiens addiert werden. Zu diesen aminofunktionellen Verbindungen (D) wird im Rahmen der vorliegenden Erfindung auch Ammoniak gezählt. Bevorzugter ist es aber, dass die mindestens eine aminofunktionelle Verbindung (D) ausgewählt ist aus organischen Verbindungen mit mindestens einer primären und/oder mindestens einer sekundären Aminogruppe. Es ist noch bevorzugter, dass die mindestens eine aminofunktionelle Verbindung (D) ausgewählt ist aus organischen Verbindungen mit 1 bis 22 Kohlenstoffatomen sowie mindestens einer primären und/oder mindestens einer sekundären Aminogruppe. Es ist noch bevorzugter, dass die mindestens eine aminofunktionelle Verbindung (D) ausgewählt ist aus organischen Verbindungen mit 1 bis 12 Kohlenstoffatomen sowie mindestens einer primären und/oder mindestens einer sekundären Aminogruppe. Es ist weiterhin bevorzugt, dass die aminofunktionelle Verbindung (D) genau eine primäre oder sekundäre Aminogruppe aufweist. Dadurch können unerwünschte Vernetzungsreaktionen reduziert oder verhindert werden. Es ist weiterhin bevorzugt, dass die aminofunktionelle Verbindung (D) kein aromatisches Amin, insbesondere kein primäres aromatisches Amin ist, da einige primäre aromatische Amine als Humankanzerogene bekannt sind. Unter einem aromatischen Amin werden im Rahmen der vorliegenden Erfindung solche Amine verstanden, bei denen das Stickstoffatom mindestens einer Aminogruppe an ein Kohlenstoffatom gebunden ist, das wiederum Teil eines aromatischen Ringsystems ist.

Es ist weiterhin bevorzugt, dass die mindestens eine aminofunktionelle Verbindung (D) aus der Gruppe bestehend aus Ammoniak, Alkylaminen, Cycloalkylaminen, Dialkylaminen, Monoalkanolaminen und Dialkanolaminen ausgewählt wird. Die am Stickstoff gebundenen aliphatischen Reste können auch aromatische Reste oder Heteroatome wie Stickstoff oder Sauerstoff tragen. Es ist daher weiterhin ebenfalls bevorzugt, dass die mindestens eine aminofunktionelle Verbindung (D) ausgewählt ist aus der Gruppe bestehend aus Diaminen, Polyaminen, Polyetheraminen und hydroxyfunktionellen aliphatischen Aminen. Bevorzugter wird die mindestens eine aminofunktionelle Verbindung (D) ausgewählt aus der Gruppe bestehend aus Alkylaminen, Cycloalkylaminen, Dialkylaminen, Monoalkanolaminen, Dialkanolaminen und Trialkanolaminen, jeweils mit 1 bis 22 Kohlenstoffatomen und mit genau einer primären oder sekundären Aminogruppe. Noch bevorzugter wird die mindestens eine aminofunktionelle Verbindung (D) ausgewählt aus der Gruppe bestehend aus Alkylaminen, Monoalkanolaminen, Dialkanolaminen und Trialkanolaminen, jeweils mit 1 bis 12 Kohlenstoffatomen und genau einer primären oder sekundären Aminogruppe. Am bevorzugtesten wird die mindestens eine aminofunktionelle Verbindung (D) ausgewählt aus der Gruppe bestehend aus Butylamin, Isobutylamin, Hexylamin, Octylamin, 2-Ethylhexylamin, Decylamin, Laurylamin, Ethanolamin, Isopropanolamin, Diethanolamin, Diisopropanolamin, N-Methylethanolamin, N-Methylisopropanolamin, 2-Amino-2-methyl-1-propanol, 2-Amino-2-ethyl-1,3-propandiol, Tris(hydroxymethyl)aminomethan (TRIS, 2-Amino-2-(hydroxymethyl)propan-1,3-diol), Morpholin, Piperidin, Cyclohexylamin, N,N-Dimethylaminopropylamin (DMAPA) und Benzylamin. Dabei können auch beliebige Gemische dieser Amine eingesetzt werden. Unter dem Begriff "Trialkanolamine" werden im Rahmen der vorliegenden Erfindung nur solche Trialkanolamine verstanden, die primäre und/oder sekundäre Aminogruppen tragen, wie beispielsweise Tris(hydroxymethyl)aminomethan.

Das molare Verhältnis der NH-Gruppen der mindestens einen aminofunktionellen Verbindung (D) zu den Epoxidgruppen des mindestens einen epoxyfunktionellen Polybutadiens (C) kann in einem weiten Bereich variiert werden. Es ist aber bevorzugt, die mindestens eine aminofunktionelle Verbindung (D) und das mindestens eine epoxyfunktionelle Polybutadien (C) in einem solchen molaren Verhältnis von NH-Gruppen zu Epoxidgruppen einzusetzen, dass ein möglichst quantitativer Umsatz aller Epoxidgruppen erreicht wird. Es ist daher bevorzugt, dass im Schritt b) die Gesamtzahl der NH-Gruppen aller aminofunktionellen Verbindungen (D) zur Gesamtzahl der Epoxidgruppen aller epoxyfunktionellen Polybutadiene (C) von 0,8:1 bis 20:1, bevorzugter von 0,9:1 bis 10:1, noch bevorzugter 1:1 bis 5:1, am bevorzugtesten von 1:1 bis 3:1 beträgt. Der Überschuss an Verbindung (D) kann nach der Umsetzung z.B. destillativ entfernt und bei Bedarf wiederverwendet werden. In diesem Zusammenhang sei darauf hingewiesen, dass ein Ammoniak-Molekül genau drei, eine primäre Aminogruppe genau zwei und eine sekundäre Aminogruppe genau eine NH-Gruppe aufweist.

Die Epoxidringöffnung mit Aminen kann ggf. in einem Lösemittel wie Ethanol, Propanol, Isopropanol oder THF stattfinden. Bevorzugt ist der Verzicht auf Lösemittel.

Vorzugsweise findet die Umsetzung in Anwesenheit mindestens eines Katalysators statt. Der Katalysator ist wahlweise im Reaktionsgemisch homogen löslich, kann als wässrige Lösung zugefügt werden oder ist heterogen als Feststoff darin verteilt.

Es ist bevorzugt, dass der Katalysator ausgewählt ist aus der Gruppe bestehend aus Lewis-Säuren und Brønsted-Säuren; bevorzugter aus der Gruppe bestehend aus Wasser, Phenolen, Alkoholen, Carbonsäuren, Ammoniumverbindungen, Phosphoniumverbindungen und Lithiumbromid; noch bevorzugter aus der Gruppe bestehend aus Carbonsäuren, Phenolen, Ammoniumverbindungen, Phosphoniumverbindungen und Lithiumbromid, noch bevorzugtester aus der Gruppe bestehend aus Carbonsäuren, Phenol und Lithiumbromid, am bevorzugtesten Lithiumbromid. Der

Katalysator ist wahlweise im Reaktionsgemisch homogen löslich, kann als wässrige Lösung zugefügt werden oder ist heterogen als Feststoff darin verteilt.

Die Art und Einsatzmenge des Katalysators werden so gewählt, dass eine möglichst rasche und quantitative Addition der mindestens einen aminofunktionellen Verbindung (D) an die Epoxidgruppen des mindestens einen epoxyfunktionellen Polybutadiens (C) erfolgt. Vorzugsweise wird Lithiumbromid, als Feststoff oder in Wasser gelöst, in einem Massenanteil von 0,05 % bis 15,0 %, bevorzugt von 0,2 % bis 10,0 %, am bevorzugtesten von 0,5 % bis 7,0 % bezogen auf die Masse der mindestens einen aminofunktionellen Verbindung (D) eingesetzt.

Die Umsetzung des mindestens einen epoxyfunktionellen Polybutadiens (C) mit der mindestens einen aminofunktionellen Verbindung (D), ggf. in Gegenwart eines Katalysators, wird bevorzugt bei 50 °C bis 250 °C, bevorzugter bei 80 °C bis 200 °C durchgeführt.

Die Komponenten werden einige Stunden gerührt, bis die Epoxidgruppen möglichst vollständig umgesetzt sind. Die Analyse auf Epoxidgruppen kann wahlweise durch NMR-spektroskopische Analyse oder durch bekannte Methoden der Epoxidzahl-Titration erfolgen (wie in den Beispielen beschrieben).

Die Reaktionsbedingungen in Schritt b) werden vorzugsweise so gewählt, dass mehr als 90 % der in Schritt a) generierten Epoxidgruppen unter Ringöffnung umgesetzt werden. Es ist am bevorzugtesten, dass im Produkt von Schritt b), also im mindestens einen hydroxy- und aminofunktionellen Polybutadien (E), keine Epoxidgruppen mehr nachweisbar sind.

Nach der Reaktion werden die gegebenenfalls überschüssigen aminofunktionellen Verbindungen (D) sowie gegebenenfalls Lösemittel, Wasser und der Katalysator vorzugsweise destillativ entfernt und ausgefallene Salze bei Bedarf abfiltriert.

Aus jeweils einer Epoxidgruppe eines epoxyfunktionellen Polybutadiens (C) resultiert nach Ringöffnung durch eine aminofunktionelle Verbindung (D) der Formel $A_1$-NH-$A_2$ eine Einheit der Formel (2a), (2b) oder (2c):

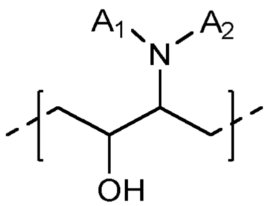

Formel (2a)

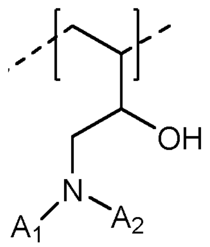

Formel (2b)

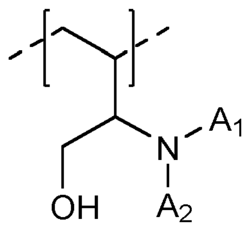

Formel (2c)

In den Formeln (2a), (2b) und (2c) sind die Reste $A_1$ und $A_2$ vorzugsweise jeweils unabhängig voneinander organische Reste, die weitere Amin- oder Hydroxygruppen tragen können, oder Wasserstoffradikale. Die Reste $A_1$ und $A_2$ können somit Heteroatome wie Stickstoff und Sauerstoff enthalten und auch über einen organischen Rest miteinander verbrückt sein, wie z.B. bei Morpholin oder Piperidin. Die aminofunktionelle Verbindung (D) der Formel $A_1$-NH-$A_2$ kann auch Ammoniak sein. Im Falle von Ammoniak sind sowohl $A_1$ also auch $A_2$ Wasserstoffradikale. Wird beispielsweise Ethanolamin als aminofunktionelle Verbindung (D) eingesetzt, so ist in den Formeln (2a), (2b) und (2c) der Rest $A_1$ z.B. ein Hydroxyethylrest und der Rest $A_2$ dann ein Wasserstoffradikal, also $A_2$ = H. Es resultiert aus jeder umgesetzten Epoxidgruppe mindestens eine seitständige OH-Gruppe.

Wird ein primäres Amin als Verbindung (D) mit einer Epoxidgruppe eines epoxyfunktionellen Polybutadiens (C) umgesetzt, entsteht stets eine sekundäre Aminogruppe mit einem reaktiven Wasserstoff am Stickstoffatom. Diese sekundäre Aminogruppe kann sich über die NH-Gruppe in einer Folgereaktion an eine weitere Epoxidgruppe addieren und somit zwei epoxyfunktionelle Polybutadiene (C) miteinander verknüpfen. Die Reaktionsbedingungen im Schritt b) werden vorzugsweise so gewählt, dass diese Verknüpfungsreaktion weitgehend unterdrückt wird.

Im Falle der erfindungsgemäß bevorzugten Polybutadiene (A) mit einem überwiegenden Anteil von 1,4-Einheiten, überwiegen von den Einheiten der Formeln (2a), (2b) und (2c) solche der Formel (2a).

Es ist bevorzugt, dass das mindestens eine hydroxy- und aminofunktionelle Polybutadien (E) 20 % bis 100 %, bevorzugter 70 % bis 100 %, noch bevorzugter 90 % bis 100 %, am bevorzugtesten 95 % bis 100% Einheiten der Formel (2a) bezogen auf die Gesamtzahl aller Einheiten der Formeln (2a), (2b) und (2c) aufweist.

Es ist bevorzugt, dass der Anteil der Einheiten der Formeln (2a), (2b) und (2c) zusammengenommen von >0 % bis <100 %, bevorzugter von >0 % bis 70 %, noch bevorzugter von 1 % bis 50 %, noch bevorzugter von 2 % bis 40 %, noch bevorzugter von 3% bis 30 % und am bevorzugtesten von 4 % bis 20 % bezogen auf die Gesamtzahl aller Einheiten des mindestens einen hydroxy- und aminofunktionellen Polybutadiens (E) beträgt.

Es ist entsprechend bevorzugt, dass der Aminierungsgrad von >0 % bis <100%, bevorzugter von >0 % bis 70 %, noch bevorzugter von 1 % bis 50 %, noch bevorzugter von 2 % bis 40 %, noch bevorzugter von 3 % bis 30 % und am

bevorzugtesten von 4 % bis 20 % beträgt.

Bei vollständiger Umsetzung in Schritt b) entspricht der Aminierungsgrad des hydroxy- und aminofunktionellen Polybutadiens (E) dem Epoxidierungsgrad des entsprechenden epoxyfunktionellen Polybutadiens (C).

**Schritt c)**

Im Schritt c) des erfindungsgemäßen Verfahrens erfolgt die Umsetzung des mindestens einen hydroxy- und aminofunktionellen Polybutadiens (E) mit mindestens einer epoxyfunktionellen Verbindung (F) zu mindestens einem polyethermodifizierten aminofunktionellen Polybutadien (G).

Das mindestens eine hydroxy- und aminofunktionelle Polybutadien (E) aus Schritt b) dient im Schritt c) als Startverbindung (Starter) für die Umsetzung mit der mindestens einen epoxyfunktionellen Verbindung (F). Unter Ringöffnung und vorzugsweise in Gegenwart eines geeigneten Katalysators wird die mindestens eine epoxyfunktionelle Verbindung (F) (im Folgenden auch einfach als "Monomer" oder "Epoxidmonomer" oder "Epoxid" bezeichnet), in einer Polyadditionsreaktion an die NH- und/oder OH-Gruppen des mindestens einen hydroxy- und aminofunktionellen Polybutadiens (E) addiert. Dies führt zur Bildung von aminofunktionellen Polybutadienen mit kammständigen (seitständigen) Polyetherketten, also zur Bildung des mindestens einen polyethermodifizierten aminofunktionellen Polybutadiens (G). Bevorzugt werden die Monomere an (zumindest im Wesentlichen) alle OH-Gruppen und an (zumindest im Wesentlichen) alle NH-Gruppen addiert. Vorzugsweise ist das polyethermodifizierte aminofunktionelle Polybutadien (G) ein lineares Polybutadien, das kammständig (seitständig) mit Polyetherresten modifiziert ist. Es ist also bevorzugt, dass das polyethermodifizierte aminofunktionelle Polybutadien (G) ein lineares Polybutadien-Rückgrat und seitständige Polyetherreste aufweist.

Bei der Umsetzung im Schritt c) handelt es sich vorzugsweise um eine Alkoxylierungsreaktion, also um eine Polyaddition von Alkylenoxiden an das mindestens eine hydroxy- und aminofunktionelle Polybutadien (E). Die Umsetzung im Schritt c) kann aber alternativ oder zusätzlich zu den Alkylenoxiden auch mit Glycidylverbindungen durchgeführt werden.

Es ist daher bevorzugt, dass die mindestens eine im Schritt c) eingesetzte epoxyfunktionelle Verbindung aus der Gruppe der Alkylenoxide, bevorzugter aus der Gruppe der Alkylenoxide mit 2 bis 18 Kohlenstoffatomen, noch bevorzugter aus der Gruppe der Alkylenoxide mit 2 bis 8 Kohlenstoffatomen, am bevorzugtesten aus der Gruppe bestehend aus Ethylenoxid, Propylenoxid, 1-Butylenoxid, *cis*-2-Butylenoxid, *trans*-2-Butylenoxid, Isobutylenoxid und Styroloxid ausgewählt ist; und/oder, dass die mindestens eine im Schritt c) eingesetzte epoxyfunktionelle Verbindung aus der Gruppe der Glycidylverbindungen, bevorzugter aus der Gruppe der monofunktionellen Glycidylverbindungen, am bevorzugtesten aus der Gruppe bestehend aus Phenylglycidylether, o-Kresylglycidylether, tert-Butylphenylglycidylether, Allylglycidylether, Butylglycidylether, 2-Ethylhexylglycidylether, $C_{12}/C_{14}$-Fettalkoholglycidylether und $C_{13}/C_{15}$-Fettalkoholglycidylether ausgewählt ist.

Die Monomere können wahlweise einzeln in reiner Form, abwechselnd hintereinander in beliebiger Dosierreihenfolge, aber auch gleichzeitig gemischt zugefügt werden. Die Sequenz der Monomereinheiten in der entstehenden Polyetherkette unterliegt damit einer blockweisen Verteilung oder einer statistischen Verteilung oder einer graduellen Verteilung im Endprodukt.

Durch das erfindungsgemäße Verfahren werden seitständige Polyetherketten am Polybutadien aufgebaut, die sich dadurch auszeichnen, dass sie hinsichtlich Strukturaufbau und Molmasse gezielt und reproduzierbar hergestellt werden können.

Die Abfolge der Monomereinheiten kann in weiten Grenzen durch die Reihenfolge der Zugabe variabel gestaltet werden.

Die Molmassen der seitständigen Polyetherreste können nach dem erfindungsgemäßen Verfahren in weiten Grenzen variiert und gezielt und reproduzierbar über das Molverhältnis der zugefügten Monomere in Bezug auf die NH- und OH-Gruppen des mindestens einen vorgelegten hydroxy- und aminofunktionellen Polybutadiens (E) aus Schritt b) gesteuert werden.

Die polyethermodifizierten aminofunktionellen Polybutadiene (G) und entsprechend auch die daraus hergestellten hydrierten polyethermodifizierten aminofunktionellen Polybutadiene (H) sind vorzugsweise dadurch gekennzeichnet, dass sie gemäß den Formeln (3a), (3b) und (3c) über eine Amino- und/oder Ethergruppe an das Polybutadiengerüst gebundene Reste B enthalten,

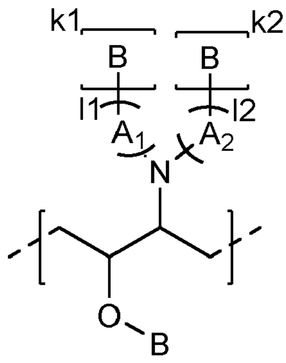

Formel (3a)

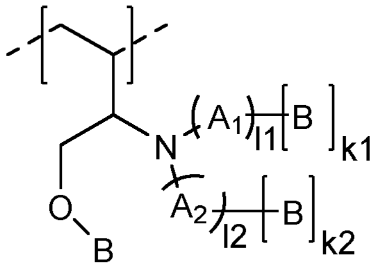

Formel (3b)

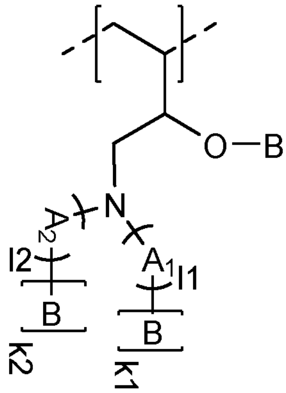

Formel (3c)

Die Reste $A_1$ und $A_2$ sind jeweils unabhängig voneinander organische Reste, bevorzugt mit 1 bis 22, am bevorzugtesten mit 1 bis 12 Kohlenstoffatomen, wobei die Reste $A_1$ und $A_2$ kovalent miteinander verbunden sein können. Die Reste $A_1$ und $A_2$ können dabei Heteroatome, vorzugsweise Stickstoff und Sauerstoff, enthalten.

Die Indizes k1 und k2 in den Formeln (3a), (3b) bzw. (3c) sind jeweils unabhängig voneinander ganze Zahlen von 0 bis 8, bevorzugt von 0 bis 6, am bevorzugtesten von 0 bis 4. Des Weiteren sind die Indizes l1 und l2 in den Formeln (3a), (3b) bzw. (3c) ganze Zahlen und jeweils unabhängig voneinander entweder 0 oder 1. Die durch Alkoxylierung entstandenen Reste B können somit k1-fach bzw. k2-fach an die Reste $A_1$ bzw. $A_2$ gebunden vorliegen, wobei die chemische Anbindung über ein Stickstoffatom oder ein Sauerstoffatom erfolgt, welches Teil von $A_1$ und $A_2$ ist. Die durch Alkoxylierung entstandenen Reste B können aber auch direkt am dargestellten Stickstoffatom gebunden vorliegen. Wenn in den Formeln (2a), (2b) oder (2c) der Rest $A_1$ oder $A_2$ ein Wasserstoffradikal ist, dann ist in den Formeln (3a), (3b) bzw. (3c) Index l1 bzw. l2 gleich 0 und k1 bzw. k2 gleich 1, d.h. der entsprechende Rest $A_1$ oder $A_2$ ist in den Formeln (3a), (3b) und (3c) nicht existent und dafür ist ein Polyetherrest B direkt an das dargestellte Stickstoffatom gebunden. Eine N-H-Gruppe in den Formeln (2a), (2b) oder (2c) wird also durch eine N-B-Gruppe ersetzt. Wenn in den Formeln (2a), (2b) oder (2c) der Rest $A_1$ oder $A_2$ ein organischer Rest ist, dann ist in den Formeln (3a), (3b) bzw. (3c) Index l1 bzw. l2 gleich 1. Wenn in den Formeln (2a), (2b) oder (2c) sowohl $A_1$ also auch $A_2$ Wasserstoffradikale sind, dann sind in den Formeln (3a), (3b) bzw. (3c) die Indizes l1 und l2 gleich 0 sowie k1 und k2 gleich 1, d.h. die Reste $A_1$ und $A_2$ in den Formeln (3a), (3b) und (3c) sind nicht existent und die Polyetherreste B sind direkt an das dargestellte Stickstoffatom gebunden. Die beiden N-H-Gruppen in den Formeln (2a), (2b) oder (2c) werden also jeweils durch eine N-B-Gruppe ersetzt.

Wird beispielsweise im Schritt b) als aminofunktionelle Verbindung (D) ein primäres Alkylamin eingesetzt und weist der Alkylrest keine weiteren gegenüber Epoxiden reaktiven Gruppen, wie z.B. OH- oder NH-Gruppen, auf, so gilt z.B. l1 = 1, k1 = 0, l2 = 0 und k2 = 1.

Wird beispielsweise im Schritt b) als aminofunktionelle Verbindung (D) das primäre Amin Ethanolamin eingesetzt, so ist z.B. $A_1$ ein zweibindiger Rest der Formel $-CH_2CH_2O-$, der in dieser Darstellung links über das Kohlenstoffatom an das Stickstoffatom der Aminogruppe und rechts über das Sauerstoffatom an einen Rest B gebunden ist, d.h. es gilt z.B. l1 = 1, k1 = 1, l2 = 0 und k2 = 1.

Wird beispielsweise im Schritt b) als aminofunktionelle Verbindung (D) das primäre Amin Tris(hydroxymethyl) aminomethan (TRIS, 2-Amino-2-(hydroxymethyl)propan-1,3-diol) eingesetzt, so ist z.B. $A_1$ ein vierbindiger Rest der Formel $-C(CH_2O-)_3$, der in dieser Darstellung links über das Kohlenstoffatom an das Stickstoffatom der Aminogruppe und rechts über die drei Sauerstoffatome an jeweils einen Rest B (und somit insgesamt an drei Reste B) gebunden ist, d.h. es gilt z.B. l1 = 1, k1 = 3, l2 = 0 und k2 = 1.

Wird beispielsweise im Schritt b) als aminofunktionelle Verbindung (D) das sekundäre Amin Diethanolamin eingesetzt, so sind z.B. $A_1$ und $A_2$ zweibindige Reste der Formel $-CH_2CH_2O-$, die in dieser Darstellung links über das Kohlenstoffatom an das Stickstoffatom der Aminogruppe und rechts über das Sauerstoffatom an einen Rest B gebunden sind, d.h. es gilt: l1 =1 , k1 = 1, l2 = 1 und k2 = 1.

Wird beispielsweise im Schritt b) als aminofunktionelle Verbindung (D) das sekundäre Amin N-Methylethanolamin eingesetzt, dann ist z.B. $A_1$ eine Methylgruppe und $A_2$ ein zweibindiger Rest der Formel $-CH_2CH_2O-$, der in dieser Darstellung links über das Kohlenstoffatom an das Stickstoffatom der Aminogruppe und rechts über das Sauerstoffatom an den Rest B gebunden ist, d.h. es gilt: l1 = 1, k1 = 0, l2 = 1 und k2 = 1.

Wird beispielsweise im Schritt b) als aminofunktionelle Verbindung (D) das sekundäre Amin Piperidin eingesetzt, dann sind $A_1$ und $A_2$ kovalent miteinander verbunden und bilden zusammen den zweibindigen Rest $-CH_2CH_2CH_2CH_2CH_2-$, der in dieser Darstellung sowohl links und als auch rechts an das Stickstoffatom der Aminogruppe

gebunden ist, d.h. es gilt: l1 = 1, k1 = 0, l2 = 1 und k2 = 0.

Es resultiert also vorzugsweise bei der Alkoxylierungsreaktion aus (zumindest fast) jeder seitständigen OH- und NH-Gruppe des mindestens einen hydroxy- und aminofunktionellen Polybutadiens (E) jeweils genau ein seitständiger Rest B. Der Rest B ist wiederum aus einem oder mehreren Monomeren, vorzugsweise aus mehreren Monomeren, der mindestens einen eingesetzten epoxyfunktionellen Verbindung (F) aufgebaut. Es ist möglich, wenn auch weniger bevorzugt, dass bei der Alkoxylierungsreaktion nicht aus jeder OH- oder NH-Gruppe des hydroxy- und aminofunktionellen Polybutadiens (E) ein seitständiger Rest B resultiert, sondern nur ein Teil, vorzugsweise aber der überwiegende Teil der OH- und NH-Gruppen im Schritt c) umgesetzt werden.

Im Sinne der Erfindung können prinzipiell alle dem Fachmann bekannten Alkoxylierungskatalysatoren eingesetzt werden, z.B. basische Katalysatoren wie Alkalihydroxide, Alkalialkoholate, Amine, Guanidine, Amidine, Phosphorverbindungen wie Phosphine (z.B. Triphenylphosphin), darüber hinaus Brønsted-saure und Lewis-saure Katalysatoren wie $SnCl_4$, $SnCl_2$, $SnF_2$, $BF_3$ und $BF_3$-Komplexe, sowie Doppelmetallcyanid (DMC)-Katalysatoren. Auf die Zugabe eines Katalysators kann gegebenenfalls verzichtet werden.

Vor der Epoxidzufuhr, also vor der Zugabe der mindestens einen eingesetzten epoxyfunktionellen Verbindung (F), wird der mit dem Starter und optional dem Katalysator teilweise befüllte Reaktor z.B. mit Stickstoff inertisiert. Dies geschieht beispielsweise durch mehrfaches abwechslungsweises Evakuieren und Zuführen von Stickstoff. Es ist vorteilhaft, den Reaktor nach dem letzten Aufdrücken von Stickstoff auf unter 200 mbar zu evakuieren. Die Addition der ersten Menge an Epoxidmonomer findet somit vorzugsweise in den evakuierten Reaktor statt. Die Dosage der Monomere erfolgt unter Rühren und ggf. Kühlen, um die freiwerdende Reaktionswärme abzuführen und die vorgewählte Reaktionstemperatur einzuhalten. Als Starter dient das mindestens eine hydroxy- und aminofunktionelle Polybutadien (E) oder es kann auch ein bereits entsprechend dem erfindungsgemäßen Verfahren hergestelltes polyethermodifiziertes aminofunktionelles Polybutadien (G) als Starter eingesetzt werden, wie weiter unten beschrieben wird.

In einer besonderen Ausführungsform kann beim Start der Monomerzugabe auf die Zugabe eines Katalysators verzichtet werden. Dies ist z.B. dann der Fall, wenn die am Polybutadien gebundenen Aminogruppen ausreichend reaktiv sind. Sind etwa ausreichend viele und nukleophile NH-Funktionen am Polybutadien vorhanden, so katalysiert der Starter selbst die Alkoxylierungsreaktion. Die Reaktionsgeschwindigkeit nimmt in der Regel mit der Polyetherkettenlänge ab. Zur Erzielung höhermolekularer Polyetherreste B kann es erforderlich oder förderlich sein, einen der vorgenannten Katalysatoren zu einem späteren Zeitpunkt der Alkoxylierungsreaktion hinzuzufügen.

**DMC-Katalyse**

Vorzugsweise werden Zink/Cobalt-DMC-Katalysatoren eingesetzt, insbesondere solche, die Zinkhexacyanocobaltat(III) enthalten. Vorzugsweise werden die in US 5,158,922, US 20030119663, WO 01/80994 beschriebenen DMC-Katalysatoren eingesetzt. Die Katalysatoren können amorph oder kristallin sein.

Es ist bevorzugt, dass die Katalysatorkonzentration von >0 wppm bis 1000 wppm, bevorzugter von >0 wppm bis 700 wppm, am bevorzugtesten von >10 wppm bis 500 wppm bezogen auf die Gesamtmasse der entstehenden Produkte beträgt.

Vorzugsweise wird der Katalysator nur einmal in den Reaktor dosiert. Dieser sollte vorzugsweise sauber, trocken und frei von basischen Verunreinigungen sein, die den DMC-Katalysator inhibieren könnten. Die Katalysatormenge ist vorzugsweise so einzustellen, dass eine ausreichende katalytische Aktivität für das Verfahren gegeben ist. Der Katalysator kann als Feststoff oder in Form einer Katalysatorsuspension dosiert werden. Wird eine Suspension verwendet, so eignet sich insbesondere der Starter als Suspensionsmittel.

Um die DMC-katalysierte Umsetzung zu starten, kann es vorteilhaft sein, den Katalysator zunächst mit einer Portion der mindestens einen epoxyfunktionellen Verbindung (F), vorzugsweise ausgewählt aus der Gruppe der Alkylenoxide, insbesondere mit Propylenoxid und/oder Ethylenoxid, zu aktivieren. Nach Anspringen der Alkoxylierungsreaktion kann mit der kontinuierlichen Monomerzugabe begonnen werden.

Die Reaktionstemperatur im Falle einer DMC-katalysierten Umsetzung in Schritt c) beträgt bevorzugt von 60 °C bis 200 °C, bevorzugter von 90 °C bis 160 °C und am bevorzugtesten von 100 °C bis 140 °C.

Der Innendruck des Reaktors im Falle einer DMC-katalysierten Umsetzung in Schritt c) beträgt bevorzugt von 0,02 bar bis 100 bar, bevorzugter von 0,05 bar bis 20 bar, am bevorzugtesten von 0,1 bar bis 10 bar (absolut).

Am bevorzugtesten wird eine DMC-katalysierte Umsetzung in Schritt c) bei einer Temperatur von 100 °C bis 140 °C und einem Druck von 0,1 bar bis 10 bar durchgeführt.

Die Umsetzung kann z.B. zwecks Viskositätserniedrigung in einem geeigneten Lösemittel durchgeführt werden. Nach Beendigung der Epoxidaddition folgt vorzugsweise eine Nachreaktion zur Vervollständigung des Umsatzes. Die Nachreaktion kann z.B. durch Weiterreaktion bei Reaktionsbedingungen (also Beibehaltung z.B. der Temperatur) ohne Zugabe von Edukten durchgeführt werden. Der DMC-Katalysator verbleibt üblicherweise im Reaktionsgemisch.

Nicht abreagierte Epoxide und eventuell weitere flüchtige Bestandteile können nach erfolgter Umsetzung durch Vakuumdestillation, Wasserdampf- oder Gasstrippen oder andere Methoden der Desodorierung entfernt werden. Das

fertige Produkt wird abschließend bei <100 °C filtriert, um evtl. vorhandene Trübstoffe zu entfernen.

**Basische Katalyse**

Alternativ zu den DMC-Katalysatoren können im Schritt c) auch basische Katalysatoren verwendet werden. Geeignet sind insbesondere Alkalimetallalkoholate wie Natriummethanolat und Kaliummethanolat, die als Feststoff oder in Form ihrer methanolischen Lösungen zugefügt werden. Darüber hinaus können alle Alkalihydroxide, insbesondere Natriumhydroxid und/oder Kaliumhydroxid eingesetzt werden, und zwar sowohl als Feststoff als auch als z.B. wässrige oder alkoholische Lösungen. Darüber hinaus können erfindungsgemäß auch basische Stickstoffverbindungen, bevorzugt Amine, Guanidine und Amidine, am bevorzugtesten tertiäre Amine wie Trimethylamin und Triethylamin verwendet werden.

Es ist bevorzugt, die basischen Katalysatoren in einer Konzentration von >0 mol-% bis 100 mol-%, bevorzugter von >0 mol-% bis 50 mol-%, am bevorzugtesten von 3 mol-% bis 40 mol-% bezogen auf die Summe der OH- und NH-Gruppen des Starters einzusetzen.

Die Reaktionstemperatur im Falle einer basisch katalysierten Umsetzung in Schritt c) beträgt bevorzugt von 80 °C bis 200 °C, bevorzugter von 90 °C bis 160 °C und am bevorzugtesten von 100 °C bis 160 °C.

Der Innendruck des Reaktors im Falle einer basisch katalysierten Umsetzung in Schritt c) beträgt bevorzugt von 0,2 bar bis 100 bar, bevorzugter von 0,5 bar bis 20 bar, am bevorzugtesten von 1 bar bis 10 bar (absolut).

Am bevorzugtesten wird die basisch katalysierte Umsetzung in Schritt c) bei einer Temperatur von 100 °C bis 160 °C und einem Druck von 1 bar bis 10 bar durchgeführt.

Die Umsetzung kann optional in einem geeigneten Lösemittel durchgeführt werden. Nach Beendigung der Epoxidaddition folgt vorzugsweise eine Nachreaktion zur Vervollständigung des Umsatzes. Die Nachreaktion kann z.B. durch Weiterreaktion bei Reaktionsbedingungen ohne Zugabe von Edukten durchgeführt werden. Nicht abreagierte Epoxide und eventuell weitere flüchtige Bestandteile können nach erfolgter Umsetzung durch Vakuumdestillation, Wasserdampf- oder Gasstrippen oder andere Methoden der Desodorierung entfernt werden. Flüchtige Katalysatoren, wie z.B. flüchtige Amine, werden dabei entfernt.

Zur Neutralisation der basischen Rohprodukte werden Säuren wie Phosphorsäure oder Schwefelsäure oder Carbonsäuren wie Essigsäure und Milchsäure zugefügt. Bevorzugt ist der Einsatz wässriger Phosphorsäure und Milchsäure. Die Einsatzmenge der jeweiligen Säure richtet sich nach der zuvor verwendeten Menge an basischem Katalysator. Das basische Polybutadien mit seitständigen Polyetherresten wird in Gegenwart der Säure bei vorzugsweise 40 °C bis 95 °C gerührt und anschließend in einer Vakuumdestillation bei <100 mbar und 80 °C bis 130 °C trocken destilliert. Das neutralisierte Produkt wird abschließend vorzugsweise bei <100 °C filtriert, um ausgefällte Salze zu entfernen.

Es ist bevorzugt, dass die erfindungsgemäßen Endprodukte einen Wassergehalt von <0,2 % (angegeben als Massenanteil bezogen auf die Gesamtmasse des Endprodukts) und eine Säurezahl von <0,5 mg KOH/g haben und praktisch phosphatfrei sind.

**Produkte als Starter**

Nicht immer ist es möglich, die gewünschte Molmasse des Endpropdukts in nur einem einzigen Reaktionsschritt, insbesondere Alkoxylierungsschritt, zu erreichen. Besonders, wenn lange Polyetherseitenketten angestrebt werden und/oder der Starter aus Schritt b), also das mindestens eine hydroxy- und aminofunktionelle Polybutadien (E), eine hohe Funktionalität an OH- und NH-Gruppen aufweist, müssen große Mengen an Epoxidmonomeren addiert werden. Dies lässt die Reaktorgeometrie manchmal nicht zu. Die polyethermodifizierten aminofunktionellen Polybutadiene (G) aus Schritt c) tragen an den Enden ihrer seitständigen Polyetherreste jeweils eine OH-Gruppe und eignen sich daher ihrerseits als Starter für den Aufbau höhermolekularer Folgeprodukte. Sie stellen im Sinne der Erfindung Vorprodukte und Startverbindungen für die Synthese von Polybutadienen mit längeren Polyetherresten dar. Die Umsetzung der mindestens einen epoxyfunktionellen Verbindung (F) kann in Schritt c) also in mehreren Teilschritten erfolgen.

Ein mit Hilfe der DMC-Katalyse gemäß Schritt c) hergestelltes Produkt kann erfindungsgemäß wahlweise mittels DMC-Katalyse oder unter Einsatz einer der vorgenannten basischen oder sauren Katalysatoren durch erneute Addition von Epoxidmonomeren aufalkoxyliert werden. Optional kann weiterer DMC-Katalysator zugefügt werden, um z.B. die Reaktionsgeschwindigkeit bei der Kettenverlängerung zu steigern.

Ebenso kann ein unter Basenkatalyse hergestelltes Produkt aus Schritt c) wahlweise basisch, sauer oder mittels DMC-Katalyse zu höheren Molmassen alkoxyliert werden. In Schritt c) wird vorteilhaft auf die Neutralisation verzichtet, wenn beabsichtigt ist, das basische Vorprodukt weiter basenkatalysiert mit Monomeren umzusetzen. Optional kann weiterer basischer Katalysator zugefügt werden, um z.B. die Reaktionsgeschwindigkeit bei der Kettenverlängerung zu steigern.

**Schritt d)**

Im erfindungsgemäßen Verfahrensschritt d) erfolgt die Hydrierung des mindestens einen polyethermodifizierten aminofunktionellen Polybutadiens (G) zu mindestens einem hydrierten polyethermodifizierten aminofunktionellen Polybutadien (H).

Dabei werden die C-C-Doppelbindungen des polyethermodifizierten aminofunktionellen Polybutadiens (G) teilweise oder vollständig hydriert. Die C-C-Doppelbindungen werden also teilweise oder vollständig in C-C-Einfachbindungen umgewandelt.

Eine Einheit (X) wird im Falle ihrer Hydrierung zu einer Einheit (V) und eine Einheit (Y) bzw. (Z) entsprechend zu einer Einheit (W) umgesetzt:

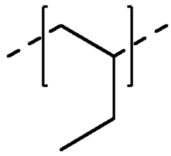

(V)

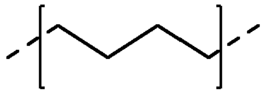

(W)

Vorzugsweise werden dabei mindestens 30 %, bevorzugter mindestens 60 %, noch bevorzugter mindestens 90 %, besonders bevorzugt mindestens 95 % der im polyethermodifizierten Polybutadien (G) enthaltenen Doppelbindungen hydriert. Die Bestimmung des Hydrierungsgrades erfolgt vorzugsweise mit Hilfe der $^{1}$H-NMR-Spektroskopie, insbesondere wie in den Beispielen beschrieben.

Es ist weiterhin bevorzugt, dass bei der Hydrierung Lösungsmittel eingesetzt werden, da die hydrierten polyethermodifizierten aminofunktionellen Polybutadiene (H) meist hohen Viskositäten aufweisen. Vorteilhaft einsetzbare Lösungsmittel sind z.B. Wasser, Alkane, Isoalkane, Cycloalkane, Alkylaromaten, Alkohole, Ether und/oder Ester, allein oder in Mischung. Vorteilhaft einsetzbare Alkane sind beispielsweise *n*-Hexan, *n*-Heptan, *n*-Octan, *n*-Nonan, *n*-Decan, *n*-Undecan und/oder *n*-Dodecan. Vorteilhaft einsetzbare Cycloalkane sind beispielsweise Cyclohexan, Methylcyclohexan, Cycloheptan, Cyclooctan, Cyclononan, Cyclodecan, Cycloundecan, Cyclododecan und/oder Decalin. Vorteilhaft einsetzbare Alkylaromaten sind Toluol, Xylol, Cumol, *n*-Propylbenzol, Ethylmethylbenzol, Trimethylbenzol, Solvent Naphtha und/oder jegliche großtechnisch verfügbare Alkylbenzole. Vorteilhaft einsetzbare Alkohole sind beispielsweise n-Propylalkohol, Isopropylalkohol und n-Butylalkohol. Ein vorteilhaft einsetzbarer Ether ist beispielsweise Tetrahydrofuran und vorteilhaft einsetzbare Ester sind beispielsweise Ethylacetat und Butylacetat. Besonders vorteilhaft einsetzbar sind aromatische Lösungsmittel wie Toluol, Xylol und Cumol oder hochsiedende Ester wie Butylacetat, insbesondere bevorzugt werden Xylol und/oder Butylacetat eingesetzt. Die vorteilhaft einsetzbare Menge an Lösungsmittel ist vom Fachmann leicht dem konkreten Anwendungsfall anzupassen. Bevorzugt werden zwischen 0 und 90 Gew.-% Lösungsmittel bezogen auf die Gesamtmasse aus polyethermodifizierten aminofunktionellen Polybutadienen (G) und Lösungsmittel eingesetzt, bevorzugter zwischen 10 und 85%, noch bevorzugter zwischen 30 und 80% und am bevorzugtesten zwischen 50 und 75%.

Die Hydrierung kann vorteilhaft in einem Druckautoklaven durchgeführt werden. Durch die Aufgabe (Zugabe) von Wasserstoff in das geschlossenes Reaktionsgefäß wird dabei ein Überdruck, also ein gegenüber dem Atmosphärendruck erhöhter Druck, erzeugt. Bevorzugte Drücke liegen zwischen 1 bar und 100 bar, bevorzugter zwischen 2 bar und 50 bar, am bevorzugtesten zwischen 3 bar und 10 bar.

Weiterhin vorteilhaft durchführbar ist die Hydrierung auch im sogenannten Blubber-Verfahren. Bei diesem Verfahren wird das Reaktionsgemisch in einem offenen Reaktionsgefäß durchgeführt, wobei kontinuierlich unter Spiegel Wasserstoff eingeleitet wird. In diesem Fall wird die Hydrierung also unter Atmosphärendruck durchgeführt.

Unabhängig davon, ob die Hydrierung unter Atmosphärendruck oder unter Überdruck durchgeführt wird, ist es bevorzugt, für eine ausreichend gute Durchmischung des Reaktionssystems zu sorgen.

Die Temperatur ist bei der Hydrierung in weiten Bereichen variierbar und wird dem konkreten Reaktionssystem aus Katalysator und polyethermodifizierten aminofunktionellen Polybutadienen (G) angepasst. Es ist bevorzugt, dass die Temperatur zwischen 25°C und 200°C, bevorzugter zwischen 60°C und 175°C und am bevorzugtesten zwischen 100°C und 150°C liegt.

Es ist bevorzugt, dass die Hydrierung mit Wasserstoff in Gegenwart mindestens eines Hydrierkatalysators durchgeführt wird.

Als Katalysatoren können prinzipiell alle dem Fachmann bekannten Hydrierkatalysatoren allein oder in Mischung mehrerer Katalysatoren eingesetzt werden. Der Einsatz von homogenen und/oder heterogenen Katalysatoren kann vorteilhaft sein, der Einsatz heterogener Katalysatoren ist aufgrund der leichteren Entfernbarkeit nach erfolgter

Hydrierung bevorzugt.

Bevorzugt einsetzbare Edelmetallkatalysatoren sind beispielsweise auf Basis von Platin, Palladium, Rhodium, Iridium und Ruthenium. Vorteilhafte Nichtedelmetallkatalysatoren sind beispielsweise auf Basis von Nickel, Kupfer, Cobalt, Mangan, Molybdän, Wolfram und/oder Titan. Alle Katalysatoren können in geträgerter Form oder pur (also ungeträgert) eingesetzt werden.

Weiter bevorzugt sind Hydrierkatalysatoren auf Basis von Nickel, Palladium, Rhodium und/oder Ruthenium. Noch bevorzugter werden Raney-Nickel, Palladium auf Aktivkohle, Ruthenium auf Aktivkohle oder Rhodium als Wilkinson-Katalysator (Chloridotris(triphenylphosphin)rhodium(I)) eingesetzt. Besonders bevorzugt wird Raney-Nickel, Palladium auf Aktivkohle und/oder der Wilkinson-Katalysator als Hydrierkatalysator verwendet. Wenn Mischungen von zwei oder mehr der vorgenannten Hydrierkatalysatoren verwendet werden, dann ist eine Mischung von Raney-Nickel und Palladium auf Aktivkohle bevorzugt.

Die Menge des eingesetzten Katalysators kann dem jeweiligen Anwendungsfall angepasst werden. Die eingesetzte Menge wird mindestens so gewählt, dass eine Hydrierung stattfinden kann. Die Menge des eingesetzten Katalysators beträgt bevorzugt zwischen 0,1 Gew.-% und 10 Gew.-%, bevorzugter zwischen 0,2 Gew.-% und 7 Gew.-%, am bevorzugtesten zwischen 0,3 Gew.-% und 5 Gew.-% bezogen auf die eingesetzte Menge des zu hydrierenden, polyethermodifizierten aminofunktionellen Polybutadiens (G).

Nach beendeter Hydrierung wird das Reaktionsgemisch vorzugsweise filtriert, um enthaltene Feststoffe wie beispielsweise den heterogenen Katalysator zu entfernen. Je nach Viskosität des Reaktionsgemisches kann es vorteilhaft sein, das Reaktionsgemisch vor der Filtration mit einem geeigneten Lösungsmittel bevorzugt Butylacetat oder Xylol, zu verdünnen.

Das nach der Filtration erhaltene Filtrat wird abschließend destilliert, um leichter flüchtige Bestandteile wie beispielsweise enthaltenes Lösungsmittel zu entfernen und das erfindungsgemäße reine hydrierte polyethermodifizierte aminofunktionelle Polybutadien (H) zu isolieren.

**Optionale Schritte cc) und dd)**

In einem optionalen Schritt cc) kann das mindestens eine polyethermodifizierte aminofunktionelle Polybutadien (G) ohne endverkappte Polyetherreste mit mindestens einem Endverkappungsreagenz (I) zu mindestens einem polyethermodifizierten aminofunktionellen Polybutadien (G) enthaltend endverkappte Polyetherreste umgesetzt werden.

Im Schritt cc) kann also das mindestens eine polyethermodifizierte aminofunktionelle Polybutadien ohne endverkappte Polyetherreste (G1) mit mindestens einem Endverkappungsreagenz (I) zu mindestens einem polyethermodifizierten aminofunktionellen Polybutadien enthaltend endverkappte Polyetherreste (G2) umgesetzt werden.

Alternativ zum optionalen Schritt cc) kann in einem optionalen Schritt dd) das mindestens eine hydrierte polyethermodifizierte aminofunktionelle Polybutadien (H) ohne endverkappte Polyetherreste mit mindestens einem Endverkappungsreagenz (I) zu mindestens einem hydrierten polyethermodifizierten aminofunktionellen Polybutadien (H) enthaltend endverkappte Polyetherreste umgesetzt werden.

Im Schritt dd) kann also das mindestens eine hydrierte polyethermodifizierte aminofunktionelle Polybutadien ohne endverkappte Polyetherreste (H1) mit mindestens einem Endverkappungsreagenz (I) zu mindestens einem hydrierten polyethermodifizierten aminofunktionelle Polybutadien enthaltend endverkappte Polyetherreste (H2) umgesetzt werden.

Unter "endverkappten Polyetherresten" werden solche Polyetherreste verstanden, die keine Hydroxygruppen aufweisen.

Im den Schritten cc) und dd) werden die Reste B der Polybutadiene (G1) bzw. (H1), welche terminal Hydroxygruppen aufweisen, vorzugsweise zu Ester-, Ether-, Urethan- und/oder Carbonatgruppen umgesetzt. Die Endverkappung von Polyethern ist dem Fachmann bekannt, wie z.B. die Veresterung mit Carbonsäuren oder Carbonsäureanhydriden, insbesondere die Acetylierung mit Hilfe von Essigsäureanhydrid, die Veretherung mit halogenierten Kohlenwasserstoffen, insbesondere die Methylierung mit Methylchlorid nach dem Prinzip der Williamson-Ether-Synthese, die Urethanisierung durch Reaktion der OH-Gruppen mit Isocyanaten, insbesondere mit Monoisocyanaten wie Stearylisocyanat und die Carbonatisierung durch Umsetzung mit Dimethylcarbonat und Diethylcarbonat.

**Optionaler Schritt e)**

In einem optionalen Schritt e) kann das mindestens eine hydrierte aminofunktionelle polyethermodifizierte Polybutadien (H) farblich aufgehellt werden.

Das hydrierte aminofunktionelle polyethermodifizierte Polybutadien (H) kann dabei ein polyethermodifiziertes aminofunktionelles Polybutadien ohne endverkappte Polyetherreste (H1) und/oder ein polyethermodifiziertes aminofunktionelles Polybutadien mit endverkappten Polyetherresten (H2) sein. Die Farbaufhellung kann beispielsweise durch den Zusatz von Aktivkohle, vorzugsweise in einem geeigneten Lösemittel, oder durch die Behandlung mit Wasserstoffperoxid erfolgen. Die Farbaufhellung kann bevorzugt über die Gardner-Farbzahl (bestimmt gemäß DIN EN ISO 4630) ermittelt werden. Es ist dabei bevorzugt, dass sich die Gardner-Farbzahl des hydrierten polyethermodifizierten Polybutadiens (H) durch die Farbaufhellung um mindestens 1, vorzugsweise um mindestens 2 verringert.

**Optionaler Schritt f)**

In einem optionalen Schritt f) kann zumindest ein Teil der Aminogruppen des mindestens einen polyethermodifizierten aminofunktionellen Polybutadiens (G) mit einer Säure oder einem Quaternisierungsreagenz wie Alkyl- und Benzylhalogeniden, Dimethylsulfat oder Chloressigsäure bzw. Natriumchloracetat zu quartären Ammoniumgruppen umgesetzt werden.

Das hydrierte aminofunktionelle polyethermodifizierte Polybutadien (H) kann dabei ein polyethermodifiziertes aminofunktionelles Polybutadien ohne endverkappte Polyetherreste (H1) und/oder ein polyethermodifiziertes aminofunktionelles Polybutadiens mit endverkappten Polyetherresten (H2) sein.

Schritt f) kann wahlweise nach Schritt d) oder nach dem optionalen Schritt e) durchgeführt werden. Nach der Quaternisierung können die Produkte z.B. in Wasser oder organischen Lösemitteln gelöst oder dispergiert werden.

**Hydrierte polyethermodifizierte aminofunktionelle Polybutadiene**

Gegenstand der vorliegenden Erfindung sind ferner hydrierte, kammständig (seitständig, seitenständig) mit Polyetherresten modifizierte aminofunktionelle Polybutadiene, wie sie durch das erfindungsgemäße Verfahren hergestellt werden können.

Ein weiterer Gegenstand der Erfindung ist daher ein hydriertes polyethermodifiziertes aminofunktionelles Polybutadien (H) erhältlich nach dem erfindungsgemäßen Verfahren.

Vorzugsweise ist das hydrierte polyethermodifizierte aminofunktionelle Polybutadien (H) ein lineares, zumindest teilweise hydriertes Polybutadien, das kammständig (seitständig, seitenständig) mit Polyetherresten modifiziert ist. Es ist also bevorzugt, dass das hydrierte polyethermodifizierte aminofunktionelle Polybutadien (H) ein lineares, zumindest teilweise hydriertes Polybutadien-Rückgrat und seitständige Polyetherreste aufweist.

Ein weiterer Gegenstand der Erfindung ist ebenso ein hydriertes polyethermodifiziertes aminofunktionelles Polybutadien (H), das vorzugsweise nach dem erfindungsgemäßen Verfahren erhältlich ist, dadurch gekennzeichnet, dass das hydrierte polyethermodifizierte aminofunktionelle Polybutadien (H) Einheiten ausgewählt

sowohl aus der Gruppe bestehend aus den zweibindigen Resten (S), (T) und (U):

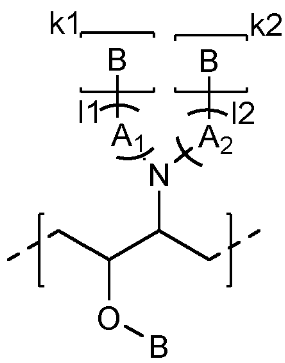

(S)

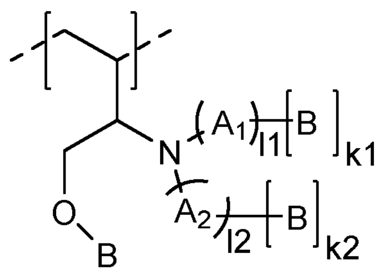

(T)

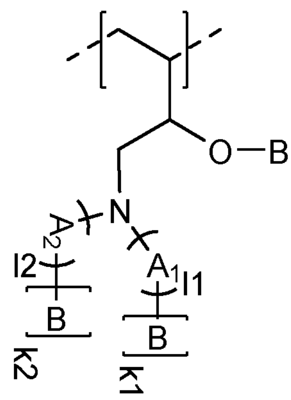

(U)

als auch aus der Gruppe bestehend aus den zweibindigen Resten (V) und (W):

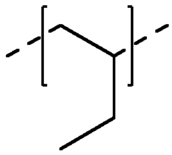 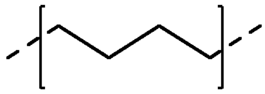

(V) (W)

und optional aus der Gruppe bestehend aus den zweibindigen Resten (X), (Y) und (Z):

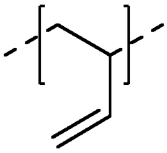 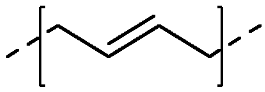 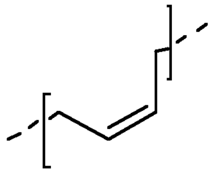

(X) (Y) (Z)

umfasst;
wobei

$A_1$ und $A_2$ jeweils unabhängig voneinander organische Reste, bevorzugt mit 1 bis 22 Kohlenstoffatomen, am bevorzugtesten mit 1 bis 12 Kohlenstoffatomen, sind, wobei die Reste $A_1$ und $A_2$ kovalent miteinander verbunden sein können,

B jeweils unabhängig voneinander ein Rest der Formel (4a) ist,

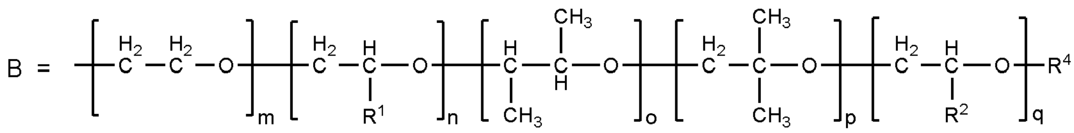

Formel (4a);

bevorzugt jeweils unabhängig voneinander ein Rest der Formel (4b) ist,

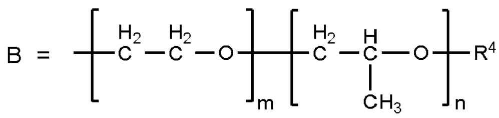

Formel (4b);

am bevorzugtesten jeweils unabhängig voneinander ein Rest der Formel (4c) ist,

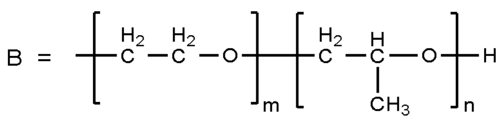

Formel (4c);

$R^1$ jeweils unabhängig voneinander ein einbindiger Kohlenwasserstoffrest mit 1 bis 16 Kohlenstoffatomen ist;

bevorzugt jeweils unabhängig voneinander ein Alkylrest mit 1 bis 16 Kohlenstoffatomen oder ein Phenylrest ist;

am bevorzugtesten jeweils unabhängig voneinander ein Methylrest, ein Ethylrest oder ein Phenylrest ist;

$R^2$ ein Rest der Formel $-CH_2-O-R^3$ ist;

$R^3$ jeweils unabhängig voneinander ein einbindiger Kohlenwasserstoffrest mit 3 bis 18 Kohlenstoffatomen ist;

bevorzugt jeweils unabhängig voneinander ein Allylrest, ein Butylrest, ein Alkylrest mit 8 bis 15 Kohlenstoffatomen oder ein Phenylrest, der mit einbindigen Resten ausgewählt aus Kohlenwasserstoffresten mit 1 bis 4 Kohlenstoffatomen substituiert sein kann, ist;

am bevorzugtesten ein tert-Butylphenylrest oder ein o-Kresylrest ist;

$R^4$ jeweils unabhängig voneinander ein einbindiger organischer Rest mit 1 bis 18 Kohlenstoffatomen oder Wasserstoff, bevorzugt Wasserstoff ist;

und

k1 und k2 jeweils unabhängig voneinander ganze Zahlen von 0 bis 8, bevorzugt von 0 bis 6, am bevorzugtesten von 0 bis 4 sind;
l1 und l2 ganze Zahlen und jeweils unabhängig voneinander entweder 0 oder 1 sind;
m, n, o, p und q jeweils unabhängig voneinander rationale Zahlen von 0 bis 300, bevorzugt von 0 bis 200, am bevorzugtesten von 0 bis 100 sind, mit der Maßgabe, dass die Summe aus m, n, o, p und q größer als 1, bevorzugt größer als 5, am bevorzugtesten größer als 10 ist;
und jede Permutation der Einheiten im Rest B, deren Anzahl mit den Indizes m, n, o, p beziehungsweise q angegeben ist, mitumfasst ist.

Die Bezeichnung "Wasserstoff" für einen Rest steht für einen Wasserstoffrest / ein Wasserstoffradikal.

Die Reste $R^1$, $R^2$, $R^3$ und $R^4$ können dabei jeweils unabhängig voneinander linear oder verzweigt, gesättigt oder ungesättigt, aliphatisch oder aromatisch, substituiert oder unsubstituiert sein.

Die allgemeine Schreibweise

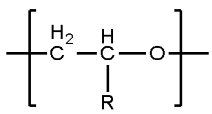

mit $R = R^1$ oder $R^2$ in Formel (4a) bzw. $R = CH_3$ in den Formeln (4b) und (4c) steht dabei sowohl für eine Einheit der Formel

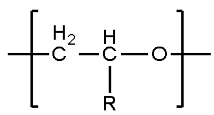

als auch eine für eine Einheit der Formel

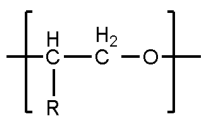

,

vorzugweise aber für eine Einheit der Formel

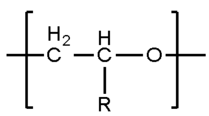

Die allgemeine Schreibweise

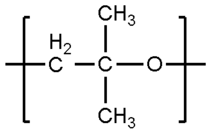

in Formel (4a) steht dabei sowohl für eine Einheit der Formel

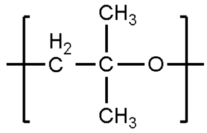

als auch eine für eine Einheit der Formel

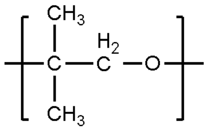

,

vorzugweise aber für eine Einheit der Formel

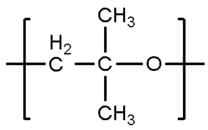

.

Es ist weiterhin bevorzugt, dass der Rest $R^4$ jeweils unabhängig voneinander ausgewählt ist aus der Gruppe bestehend aus einwertigen Kohlenwasserstoffresten mit 1 bis 18 Kohlenstoffatomen, Acylresten -C(=O)$R^5$, Urethanresten -C(=O)NH-$R^6$, Carbonatresten -C(=O)O-$R^7$ und Wasserstoff; bevorzugter ist $R^4$ jeweils unabhängig voneinander ausgewählt ist aus der Gruppe bestehend aus Alkylresten mit 1 bis 18 Kohlenstoffatomen, Alkylenresten mit 1 bis 18 Kohlenstoffatomen, Acylresten -C(=O)$R^5$, Urethanresten -C(=O)NH-$R^6$, Carbonatresten -C(=O)O-$R^7$ und Wasserstoff; am bevorzugtesten ist $R^4$ Wasserstoff; wobei die Bezeichnung "Wasserstoff" für einen Wasserstoffrest / ein Wasserstoffradikal stehen soll.

$R^5$ ist jeweils unabhängig voneinander ein Alkyl- oder ein Alkenylrest mit 1 bis 18 Kohlenstoffatomen, bevorzugt mit 1 bis 10 Kohlenstoffatomen, am bevorzugtesten ein Methylrest.

$R^6$ ist jeweils unabhängig voneinander ein Alkyl- oder ein Arylrest mit 1 bis 18 Kohlenstoffatomen, bevorzugt mit 6 bis 18 Kohlenstoffatomen.

$R^7$ ist jeweils unabhängig voneinander ein Alkylrest mit 1 bis 18 Kohlenstoffatomen, bevorzugt mit 1 bis 2 Kohlenstoffatomen.

Erfindungsgemäß beträgt die Summe (die Gesamtzahl) aller Einheiten (S), (T) und (U) dividiert durch die Summe (die Gesamtzahl) aller Einheiten (S), (T), (U), (V), (W), (X), (Y) und (Z) des mindestens einen hydrierten polyethermodifizierten aminofunktionellen Polybutadiens (H) von >0 % bis <100 %.

Das bedeutet umgekehrt, dass die Summe (die Gesamtzahl) aller Einheiten (V), (W), (X), (Y) und (Z) dividiert durch die Summe (die Gesamtzahl) aller Einheiten (S), (T), (U), (V), (W), (X), (Y) und (Z) des mindestens einen hydrierten polyethermodifizierten aminofunktionellen Polybutadiens (H) von <100 % bis >0% beträgt.

Das bedeutet, dass >0 % bis <100 % der Gesamtheit der Einheiten (S), (T), (U), (V), (W), (X), (Y) und (Z) polyethermodifiziert sind.

Das bedeutet außerdem, dass <100 % bis >0% der Gesamtheit der Einheiten (S), (T), (U), (V), (W), (X), (Y) und (Z) nicht polyethermodifiziert sind.

Es ist dabei bevorzugt, dass die Summe (die Gesamtzahl) aller Einheiten (S), (T) und (U) dividiert durch die Summe (die Gesamtzahl) aller Einheiten (S), (T), (U), (V), (W), (X), (Y) und (Z) des mindestens einen hydrierten polyethermodifizierten aminofunktionellen Polybutadiens (H) von >0 % bis 70 %, bevorzugter von 1 % bis 50 %, noch bevorzugter von 2 % bis 40 %, noch bevorzugter von 3 % bis 30 %, am bevorzugtesten von 4 % bis 20 % beträgt.

Das bedeutet, dass bevorzugt von >0 % bis 70 %, bevorzugter von 1 % bis 50 %, noch bevorzugter von 2 % bis 40 %, noch bevorzugter von 3 % bis 30 %, am bevorzugtesten von 4 % bis 20 % der Gesamtheit der Einheiten (S), (T), (U), (V), (W), (X), (Y) und (Z) polyethermodifiziert sind.

Es ist dabei weiterhin bevorzugt, dass die Summe (die Gesamtzahl) aller Einheiten (V), (W), (X), (Y) und (Z) dividiert durch die Summe (die Gesamtzahl) aller Einheiten (S), (T), (U), (V), (W), (X), (Y) und (Z) des mindestens einen hydrierten polyethermodifizierten aminofunktionellen Polybutadiens (H) von <100 % bis 30 %, bevorzugter von 99 % bis 50 %, noch bevorzugter von 98 % bis 60 %, noch bevorzugter von 97 % bis 70 %, am bevorzugtesten von 96 % bis 80 % beträgt.

Das bedeutet, dass bevorzugt von <100 % bis 30 %, noch bevorzugter von 99 % bis 50 %, noch bevorzugter von 98 % bis 60 %, noch bevorzugter von 97 % bis 70 %, am bevorzugtesten von 96 % bis 80 % der Gesamtheit der Einheiten (S), (T), (U), (V), (W), (X), (Y) und (Z) nicht polyethermodifiziert sind.

Das hydrierte polyethermodifizierte aminofunktionelle Polybutadien (H) kann teilhydriert oder vollständig hydriert sein.

Es ist daher weiterhin bevorzugt, dass die Summe (die Gesamtzahl) aller Einheiten (V) und (W) dividiert durch die Summe (die Gesamtzahl) aller Einheiten (V), (W), (X), (Y) und (Z) des mindestens einen hydrierten polyethermodifizierten Polybutadiens (H) mindestens 30%, bevorzugter mindestens 60%, noch bevorzugter mindestens 90%, besonders bevorzugt mindestens 95% beträgt. Das bedeutet, dass mindestens 30%, bevorzugter mindestens 60%, noch bevorzugter mindestens 90%, besonders bevorzugt mindestens 95% der Gesamtheit der Einheiten (V), (W), (X), (Y) und (Z) gesättigt sind, und dass weniger als 30%, bevorzugter weniger als 40%, noch bevorzugter weniger als 10%, besonders bevorzugt weniger als 5% der Gesamtheit der Einheiten (V), (W), (X), (Y) und (Z) ungesättigt sind. Dies wird vorzugsweise mit Hilfe der $^1$H-NMR-Spektroskopie, insbesondere wie in den Beispielen beschrieben, bestimmt.

Es sei darauf hingewiesen, dass die Polyethersreste B ungesättigt sein können, z.B. wenn $R^1$ und/oder $R^3$ ein Phenylrest ist. Aromatische Gruppen werden aber vorzugsweise nicht hydriert und liegen nach der Hydrierung unverändert vor.

Die zahlenmittlere Molmasse $M_n$, gewichtsmittlere Molmasse $M_w$ und Polydispersität des Polybutadienteils des hydrierten polyethermodifizierten aminofunktionellen Polybutadiens (H) sind beliebig. Unter dem Polybutadienteil wird dabei der Teil des hydrierten polyethermodifizierten aminofunktionellen Polybutadiens (H) verstanden, der vom verfahrensgemäß eingesetzten Polybutadien (A) stammt. Die zahlenmittlere Molmasse $M_n$, gewichtsmittlere Molmasse $M_w$ und Polydispersität des Polybutadienteils des hydrierten polyethermodifizierten aminofunktionellen Polybutadiens (H) ist also identisch mit der zahlenmittleren Molmasse $M_n$, gewichtsmittleren Molmasse $M_w$ bzw. Polydispersität des Polybutadiens (A), aus dem das hydrierte polyethermodifizierte aminofunktionelle Polybutadien (H) hergestellt wurde.

Es ist bevorzugt, dass die zahlenmittlere Molmasse $M_n$ des Polybutadienteils des hydrierten polyethermodifizierten aminofunktionellen Polybutadiens (H) von 200 g/mol bis 20000 g/mol, bevorzugter von 500 g/mol bis 10000 g/mol, am bevorzugtesten von 700 g/mol bis 5000 g/mol beträgt.

Alternativ ist es bevorzugt, dass die zahlenmittlere Molmasse $M_n$ des Polybutadienteils des hydrierten polyethermodifizierten aminofunktionellen Polybutadiens (H) von 2100 g/mol bis 20000 g/mol, bevorzugter von 2200 g/mol bis 10000 g/mol, am bevorzugtesten von 2300 g/mol bis 5000 g/mol beträgt.

Die zahlenmittlere Molmasse $M_n$ des Polybutadienteils ist dabei als die zahlenmittlere Molmasse $M_n$ des zugrundeliegenden Polybutadiens (A) definiert.

Es ist weiterhin bevorzugt, dass das hydrierte polyethermodifizierte aminofunktionelle Polybutadien (H) im Zahlenmittel 5 bis 360, bevorzugt 10 bis 180, am bevorzugtesten 15 bis 90 Einheiten aufweist, wobei die Einheiten aus der Gruppe bestehend aus (S), (T), (U), (V), (W), (X), (Y) und (Z) ausgewählt sind.

Alternativ ist es bevorzugt, dass das polyethermodifizierte aminofunktionelle Polybutadien (H) im Zahlenmittel 35 bis 360, bevorzugt 40 bis 180, am bevorzugtesten 45 bis 90 Einheiten aufweist, wobei die Einheiten aus der Gruppe bestehend aus (S), (T), (U), (V), (W), (X), (Y) und (Z) ausgewählt sind.

Es ist bevorzugt, dass der Massenanteil aller Einheiten (S), (T), (U), (V), (W), (X), (Y) und (Z) zusammengenommen bezogen auf die Gesamtmasse des mindestens einen hydrierten polyethermodifizierten aminofunktionellen Polybutadiens (H) mindestens 50 %, noch bevorzugter mindestens 60%, noch bevorzugter mindestens 70%, bevorzugt mindestens 80%, noch bevorzugter mindestens 90%, noch bevorzugter mindestens 95%, noch bevorzugter mindestens 99%, besonders bevorzugt 100% beträgt.

Es ist bevorzugt, dass das hydrierte polyethermodifizierte aminofunktionelle Polybutadien (H) im Wesentlichen oder vollständig aus den Einheiten (S), (T), (U), (V), (W), (X), (Y) und (Z) besteht. Es ist besonders bevorzugt, dass das hydrierte polyethermodifizierte aminofunktionelle Polybutadien (H) im Wesentlichen oder vollständig aus den Einheiten (S), (T), (U), (V) und (W) besteht.

Es ist besonders bevorzugt, dass die hydrierten polyethermodifizierten aminofunktionellen Polybutadiene (H) dadurch gekennzeichnet sind, dass der Massenanteil der Einheiten (S) bezogen auf die Gesamtmasse aller Einheiten (S), (T), (U) mindestens 95 % beträgt.

Am bevorzugtesten sind solche hydrierten polyethermodifizierten aminofunktionellen Polybutadiene (H), die sich von den oben beschriebenen Polybutadienen (A) Polyvest® 110 und Polyvest® 130 der Evonik Industries AG / Evonik Operations GmbH sowie Lithene ultra AL und Lithene ActiV 50 von Synthomer PLC ableiten.

Die Molmasse und die Polydispersität der Reste B ist beliebig. Es ist aber bevorzugt, dass die mittlere Molmasse

der Reste B von 30 g/mol bis 20000 g/mol, bevorzugter von 50 g/mol bis 10000 g/mol, noch bevorzugter von 100 g/mol bis 5000 g/mol, am bevorzugtesten von 150 g/mol bis 1000 g/mol beträgt. Die mittlere Molmasse der Reste B kann aus der Einwaage der eingesetzten Monomere bezogen auf die Anzahl der OH- und NH-Gruppen des eingesetzten hydroxy- und aminofunktionellen Polybutadiens (E) berechnet werden. Werden also beispielsweise 40 g Ethylenoxid eingesetzt und beträgt die Gesamtmenge aller OH- und NH-Gruppen des eingesetzten hydroxy- und aminofunktionellen Polybutadiens (E) zusammen 0,05 mol, so beträgt die mittlere Molmasse des Rests B 800 g/mol.

Die hydrierten polyethermodifizierten aminofunktionellen Polybutadiene (H) sind je nach Zusammensetzung und Molmasse flüssig, pastös oder fest.

Die zahlenmittlere Molmasse ($M_n$) des mindestens einen hydrierten polyethermodifizierten aminofunktionellen Polybutadiene (H) beträgt bevorzugt von 1000 g/mol bis 50000 g/mol, bevorzugter von 1500 g/mol bis 40000 g/mol, noch bevorzugter von 2000 g/mol bis 30000 g/mol, am bevorzugtesten von 3000 g/mol bis 10000 g/mol.

Ihre Polydispersität ($M_w/M_n$) ist in weiten Bereichen variabel. Die Polydispersität des mindestens einen hydrierten polyethermodifizierten aminofunktionellen Polybutadiens (H) beträgt bevorzugt von 1,5 bis 10, bevorzugter von 2 bis 8, am bevorzugtesten von 3 bis 5.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

**Beispiele:**

Allgemeine Methoden:

*Gel-Permeations-Chromatographie (GPC):*

GPC-Messungen zur Bestimmung der Polydispersität ($M_w/M_n$), der gewichtsmittleren Molmasse ($M_w$) und der zahlenmittleren Molmasse ($M_n$) der epoxyfunktionellen Polybutadiene (C) wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard. GPC-Messungen zur Bestimmung der Polydispersität ($M_w/M_n$), der gewichtsmittleren Molmasse ($M_w$) und der zahlenmittleren Molmasse ($M_n$) der Polybutadiene (A) können auf dieselbe Weise durchgeführt werden.

GPC-Messungen zur Bestimmung der Polydispersität ($M_w/M_n$), der gewichtsmittleren Molmasse ($M_w$) und der zahlenmittleren Molmasse ($M_n$) der erfindungsgemäßen polyethermodifizierten aminofunktionellen Polybutadiene (G) wurden unter den folgenden Messbedingungen durchgeführt: Säulenkombination Jordi DVB 500 Å (Länge 30 cm), Jordi DVB Mixed Bed (Länge 30 cm), Temperatur 30 °C, THF/Triethylamin als mobile Phase, Fließrate 0,4 ml/min, Probenkonzentration 3 g/l, RI-Detektor, Auswertung gegen Polystyrol-Standard. Die GPC-Messungen zur Bestimmung der Polydispersität ($M_w/M_n$), der gewichtsmittleren Molmasse ($M_w$) und der zahlenmittleren Molmasse ($M_n$) der endverkappten polyethermodifizierten aminofunktionellen Polybutadiene (K) können auf dieselbe Weise durchgeführt werden.

*Bestimmung des Gehalts der 1,4-cis-, 1,4-trans- und 1,2-Einheiten im Polybutadien:*

Die Bestimmung des Gehalts an 1,4-cis-, 1,4-trans- und 1,2-Einheiten kann mit Hilfe der $^1H$-NMR-Spektroskopie erfolgen. Diese Methode ist dem Fachmann geläufig.

*Bestimmung des Gehalts an Epoxidgruppen im epoxyfunktionellen Polybutadien (C) (Epoxidgehalt, Epoxidierungsgrad):*

Die Bestimmung des Gehalts an Epoxidgruppen erfolgte mit Hilfe der $^{13}C$-NMR-Spektroskopie. Verwendet wurde ein NMR-Spektrometer vom Typ Bruker Avance 400. Die Proben wurden dazu in Deuterochloroform gelöst. Der Epoxidgehalt ist definiert als der Anteil an epoxidierten Butadieneinheiten in mol-% bezogen auf die Gesamtheit aller in der Probe enthaltenen epoxidierten und nicht epoxidierten Butadien-Einheiten. Dies entspricht der Anzahl der Epoxidgruppen des epoxyfunktionellen Polybutadiens (C) dividiert durch die Anzahl der Doppelbindungen des eingesetzten Polybutadiens (A).

*Bestimmung des Hydrierungsgrades:*

Die Bestimmung des Hydrierungsgrades erfolgte mit Hilfe der $^1H$-NMR-Spektroskopie. Verwendet wurde ein NMR-Spektrometer vom Typ Bruker Avance 400. Die Proben wurden dazu in Deuterochloroform gelöst. Zunächst wurde der Gehalt an Doppelbindungen des polyethermodifizierten Polybutadiens (G) (also vor der Hydrierung) bestimmt, sowie

der Gehalt der Doppelbindungen des hydrierten, polyethermodifizierten Polybutadiens (H) nach der Hydrierung. Hierzu wurden die Integrale der $^1$H-NMR-Spektren zwischen 4,8 und 6,3 ppm vor und nach der Hydrierung bestimmt, welche proportional zur Anzahl der Doppelbindungen des Polybutadiens ("PB") vor ($I_{PB,vor}$) bzw. nach ($I_{PB,nach}$) der Hydrierung sind. Diese Integrale wurden zwecks Normierung dabei in Relation zu den Integralen der $^1$H-NMR-Spektren zwischen 2,8 und 4,2 bezogen, die proportional zur (unveränderlichen) Anzahl der Wasserstoffatome des Polyetherrückens ("PE") sind, auch hier jeweils vor ($I_{PE,vor}$) bzw. nach ($I_{PE,nach}$) der Hydrierung. Der Hydrierungsgrad wird anschließend über die folgende Gleichung bestimmt:

$$\text{Hydrierungsgrad} = 1 - [(I_{PB,nach}/I_{PE,nach}) / (I_{PB,vor}/I_{PE,vor})]$$

$I_{PB,nach}$ = Integral des $^1$H-NMR-Spektrums zwischen 4,8 und 6,3 ppm nach der Hydrierung

$I_{PE,nach}$ = Integral des $^1$H-NMR-Spektrums zwischen 2,8 und 4,2 ppm nach der Hydrierung

$I_{PB,vor}$= Integral des $^1$H-NMR-Spektrums zwischen 4,8 und 6,3 ppm vor der Hydrierung

$I_{PE,vor}$ = Integral des $^1$H-NMR-Spektrums zwischen 2,8 und 4,2 ppm vor der Hydrierung

*Bestimmung der Säurezahl:*

Die Säurezahlbestimmung wurde nach einem Titrationsverfahren in Anlehnung an die DIN EN ISO 2114 durchgeführt.

<u>Synthesebeispiele:</u>

*Schritt a), Herstellung der epoxidierten Polybutadiene*

Beispiel A1

Zur Herstellung eines epoxidierten Polybutadiens wurde ein Polybutadien der Formel (1) mit der Struktur x=1%, y=24% und z=75% eingesetzt (Polyvest® 110). Nach dem Stand der Technik wurden in einem 5-Liter-Reaktor unter einer Stickstoffatmosphäre 1500 g Polyvest® 110 und 146,3 g konz. Ameisensäure in 1500 g Chloroform bei Raumtemperatur vorgelegt. Anschließend wurden 540 g 30%-ige $H_2O_2$-Lösung (30 Gew.-% $H_2O_2$ bezogen auf die Gesamtmasse der wässrigen Lösung) langsam zugetropft und die Lösung dann für 7 Stunden auf 50 °C erhitzt. Nach Ende der Reaktion wurde auf Raumtemperatur abgekühlt, die organische Phase abgetrennt und diese noch viermal mit dest. $H_2O$ gewaschen. Überschüssiges Chloroform und restliches Wasser wurden abdestilliert. Es wurden 1481 g des Produktes erhalten, welches mit 1000 ppm Irganox® 1135 versetzt und unter Stickstoff gelagert wurde. Die Auswertung mittels $^{13}$C-NMR ergab einen Epoxidierungsgrad von ca. 15,8 % der Doppelbindungen. Die Auswertung mittels GPC ergab: $M_w$ = 4690 g/mol ; $M_n$ = 1982 g/mol ; $M_w/M_n$ = 2,4.

*Schritt b), Herstellung der aminofunktionellen Polybutadiene*

Beispiel B1

Zur Herstellung eines aminofunktionellen Polybutadiens mit einem Aminierungsgrad von ca. 15,8 % wurde das in Beispiel A1 hergestellte epoxidierte Polybutadien eingesetzt. Der Aminierungsgrad ist dabei die Anzahl der Aminogruppen des aminofunktionellen Polybutadiens dividiert durch die Anzahl der Doppelbindungen des in Schritt a) eingesetzten Polybutadiens. Zur Herstellung wurden in einem 1-Liter-Vierhalskolben unter einer Stickstoffatmosphäre 800 g des epoxidierten Polybutadiens mit 136,3 g Ethanolamin und 6,8 g Lithiumbromid vorgelegt und unter Rühren auf 180 °C erhitzt. Das Gemisch wurde für 15 Stunden bei dieser Temperatur gerührt. Während der Reaktion stieg die Viskosität an. Nach beendeter Reaktion wurden flüchtige Komponenten bei 180 °C und 20 mbar destillativ entfernt. Das Produkt wurde auf 60 °C abgekühlt. Es wurden 908 g eines gelblichen Produkts erhalten und unter Stickstoff gelagert. Die Auswertung mittels $^{13}$C-NMR ergab einen vollständigen Umsatz aller Epoxidgruppen woraus sich ein Aminierungsgrad von ca. 15,8 % ergibt.

*Schritt c), Alkoxylierung der hydroxy- und aminofunktionellen Polybutadiene*

Beispiel C1 (Stöchiometrie: 5 EO/5 PO pro reaktive NH/OH-Gruppe)

In einem 1,5-Liter-Autoklaven wurden 197 g des in Beispiel B1 hergestellten aminierten Polybutadiens und unter Stickstoff vorgelegt und unter Rühren auf 115 °C aufgeheizt. Der Reaktor wurde bis auf einen Innendruck von 30 mbar evakuiert, um evtl. vorhandene flüchtige Inhaltsstoffe destillativ zu entfernen. 27,4 g Propylenoxid wurden in 5 min bei 115 °C zugeführt. Der Reaktorinnendruck stieg auf einen Maximalwert von 2,3 bar (absolut) an und nahm im Laufe der Reaktion kontinuierlich ab. Nach 4 h war eine Druckkonstanz bei 0,7 bar (absolut) erreicht. Bei 115 °C und 20 mbar wurden flüchtige Komponenten entfernt, der Reaktor mit $N_2$ auf Normaldruck entspannt und das Reaktionsgemisch auf 40 °C gekühlt. Anschließend wurden 17,6 g Natriummethanolat-Lösung (30 % in Methanol) zugegeben, der Reaktorinhalt mit Stickstoff inertisiert und unter Rühren auf 115 °C erhitzt. Der Reaktorinnendruck wurde dabei auf 20 mbar gesenkt und Methanol destillativ entfernt. Eine Mischung aus 382 g Propylenoxid und 310 g Ethylenoxid wurde bei 115 °C unter Rühren und Kühlen in 6 h bei maximal 3,2 bar Innendruck zugefügt. Während der Nachreaktion von 2,5 h bei 115 °C fiel der Innendruck kontinuierlich bis zur Druckkonstanz bei 0,4 bar (absolut). Flüchtige Anteile wie restliches Propylenoxid und Ethylenoxid wurden im Vakuum abdestilliert. Das Produkt wurde auf unter 80 °C gekühlt, mit 30 %iger Phosphorsäure auf eine Säurezahl von 0,1 mg KOH/g neutralisiert, mit 500 ppm Irganox® 1135 versetzt und über ein Filter abgelassen. 881 g eines viskosen, orange farbenen, klaren polyethermodifizierten aminofunktionellen Polybutadiens wurden abgelassen und unter Stickstoff gelagert. Die Auswertung mittels GPC ergab: $M_w$ = 32145 g/mol ; $M_n$ = 8349 g/mol ; Mw/Mn = 3,85.

Beispiel C2 (Stöchiometrie: 3,8 PO pro reaktive NH/OH-Gruppe)

In einem 1,5-Liter-Autoklaven wurden 181 g des in Beispiel B1 hergestellten aminierten Polybutadiens und unter Stickstoff vorgelegt und unter Rühren auf 115 °C aufgeheizt. Der Reaktor wurde bis auf einen Innendruck von 30 mbar evakuiert, um evtl. vorhandene flüchtige Inhaltsstoffe destillativ zu entfernen. 25,2 g Propylenoxid wurden in 5 min bei 115 °C zugeführt. Der Reaktorinnendruck stieg auf einen Maximalwert von 2,4 bar (absolut) an und nahm im Laufe der Reaktion kontinuierlich ab. Nach 4,5 h war eine Druckkonstanz bei 0,7 bar (absolut) erreicht. Bei 115 °C und 20 mbar wurden flüchtige Komponenten entfernt, der Reaktor mit $N_2$ auf Normaldruck entspannt und das Reaktionsgemisch auf 40 °C gekühlt. Anschließend wurden 32,2 g Natriummethanolat-Lösung (30 % in Methanol) zugegeben, der Reaktorinhalt mit Stickstoff inertisiert und unter Rühren auf 115 °C erhitzt. Der Reaktorinnendruck wurde dabei auf 20 mbar gesenkt und Methanol destillativ entfernt. 260 g Propylenoxid wurden bei 115 °C unter Rühren und Kühlen in 1,5 h bei maximal 2,9 bar Innendruck zugefügt. Während der Nachreaktion von 2 h bei 115 °C fiel der Innendruck kontinuierlich bis zur Druckkonstanz bei 0,3 bar (absolut). Flüchtige Anteile wie restliches Propylenoxid wurden im Vakuum abdestilliert. Das Produkt wurde auf unter 80 °C gekühlt, mit 17,9 g Milchsäure (90 % in Wasser) auf eine Säurezahl von 0,1 mg KOH/g neutralisiert, mit 1000 ppm Irganox® 1135 versetzt und abgelassen. 421 g eine viskosen, orange farbenen, leicht trüben polyethermodifizierten aminofunktionellen Polybutadiens wurden abgelassen und unter Stickstoff gelagert. Die Auswertung mittels GPC ergab: $M_w$ = 25386 g/mol ; $M_n$ = 5226 g/mol ; $M_w/M_n$ = 4,86.

Beispiel C3 (Stöchiometrie: 3,8 EO pro reaktive NH/OH-Gruppe)

In einem 1,5-Liter-Autoklaven wurden 151 g des in Beispiel B1 hergestellten hydroxy- und aminofunktionellen Polybutadiens unter Stickstoff vorgelegt und unter Rühren auf 115 °C aufgeheizt. Der Reaktor wurde bis auf einen Innendruck von 30 mbar evakuiert, um evtl. vorhandene flüchtige Inhaltsstoffe destillativ zu entfernen. 15,9 g Ethylenoxid wurden in 5 min bei 115 °C zugeführt. Der Reaktorinnendruck stieg auf einen Maximalwert von 3,4 bar (absolut) an und nahm im Laufe der Reaktion kontinuierlich ab. Nach 5,5 h war eine Druckkonstanz bei 0,6 bar (absolut) erreicht. Bei 115 °C und 20 mbar wurden flüchtige Komponenten entfernt, der Reaktor mit $N_2$ auf Normaldruck entspannt und das Reaktionsgemisch auf 40 °C gekühlt. Anschließend wurden 26,9 g Natriummethanolat-Lösung (30 % in Methanol) zugegeben, der Reaktorinhalt mit Stickstoff inertisiert und unter Rühren auf 115 °C erhitzt. Der Reaktorinnendruck wurde dabei auf 20 mbar gesenkt und Methanol destillativ entfernt. 164,7 g Ethylenoxid wurden bei 115 °C unter Rühren und Kühlen in 1,5 h bei maximal 3,4 bar Innendruck zugefügt. Während der Nachreaktion von 3 h bei 115 °C fiel der Innendruck kontinuierlich bis zur Druckkonstanz bei 0,5 bar (absolut). Flüchtige Anteile wie restliches Ethylenoxid wurden im Vakuum abdestilliert. Das Produkt wurde auf unter 80 °C gekühlt, mit 14,9 g Milchsäure (90 % in Wasser) auf eine Säurezahl von 0,1 mg KOH/g neutralisiert, mit 1000 ppm Irganox® 1135 versetzt und abgelassen. 317 g eines viskosen, orange-rot farbenen, leicht trüben polyethermodifzierten aminofunktionellen Polybutadiens wurden abgelassen und unter Stickstoff gelagert. Die Auswertung mittels GPC ergab: $M_w$ = 19484 g/mol ; $M_n$ = 4474 g/mol ; $M_w/M_n$ = 3,45.

*Schritt d), Hydrierung der polyethermodifizierten aminofunktionellen Polybutadiene*

Beispiel D1

In einem 500 ml Vierhalskolben wurden 50 g des in Beispiel C1 hergestellten alkoxylierten, hydroxylierten, aminofunktionellen Polybutadiens und 150 g Xylol vorgelegt. Dann wurden 0,25 g Rh-100 (Wilkinson-Katalysator) zugegeben. Nach aufheizen auf 120 °C wird unter starkem Argonstrom und Rühren 34 h lang 0,025 - 0,05 lpm (lpm = Liter pro Minute) Wasserstoff eingeleitet. Dann wurden nochmals 0,25 g Rh-100 zugegeben und weitere 10 h 0,025 - 0,05 lpm Wasserstoff eingeleitet. Das Produkt wird nach Zugabe von 1,5 g Filterhilfe Harbolite 800 (Alpha Aesar GmbH & Co. KG) heiß filtriert. Nach der Destillation im Vakuum erhält man ein braunschwarzes trübes Produkt, welches beim Erkalten zähflüssig wird. Der Hydriergrad beträgt 64,6 %. Die Auswertung mittels GPC ergab: $M_w$ = 29189 g/mol ; $M_n$ = 8156 g/mol ; $M_w/M_n$ = 3,58.

Beispiel D2

In einem 250 ml Vierhalskolben wurden 71 g des in Beispiel C1 hergestellten alkoxylierten, hydroxylierten, aminofunktionellen Polybutadiens mit 3,55 g Raney-Nickel (Aluminium/Nickel 50/50) und 0,71 g Palladiumkatalysator Pd-Kat/C (5% Pd auf Aktivkohle, 50% Wassergehalt) unter Argon vorgelegt. Nach aufheizen auf 120 °C wird unter starkem Argonstrom und Rühren 86 h lang 0,025 - 0,05 lpm (lpm = Liter pro Minute) Wasserstoff eingeleitet. Das Produkt wird mit 28,4 g Butylacetat verdünnt und nach Zugabe von 2,1 g Filterhilfe Harbolite 800 heiß filtriert. Nach der Destillation im Vakuum erhält man ein braunschwarzes trübes Produkt, welches beim Erkalten zähflüssig wird. Der Hydriergrad beträgt 67,1 %. Die Auswertung mittels GPC ergab: $M_w$ = 32447 g/mol ; $M_n$ = 7294 g/mol ; $M_w/M_n$ = 4,45.

Beispiel D3

In einem 250 ml Vierhalskolben wurden 50 g des in Beispiel C2 hergestellten alkoxylierten, hydroxylierten, aminofunktionellen Polybutadiens mit 50 g Butylacetat unter Argon vorgelegt. Dann wurden 0,5 g Palladiumkatalysator Pd-Kat/C (5% Pd auf Aktivkohle, 50% Wassergehalt) zugegeben. Nach aufheizen auf 120 °C wird unter starkem Argonstrom und Rühren 40 h lang 0,025 - 0,05 lpm (lpm = Liter pro Minute) Wasserstoff eingeleitet. Das Produkt wird nochmals mit 20 g Xylol verdünnt und nach Zugabe von 1,5 g Filterhilfe Harbolite 800 heiß filtriert. Nach der Destillation im Vakuum erhält man ein braunschwarzes Produkt, welches beim Erkalten zähflüssig wird. Der Hydriergrad beträgt 49,6 %. Die Auswertung mittels GPC ergab: $M_w$ = 25649 g/mol ; $M_n$ = 7038 g/mol ; $M_w/M_n$ = 3,64.

Beispiel D4

In einem 250 ml Vierhalskolben wurden 31,4 g des in Beispiel C3 hergestellten alkoxylierten, hydroxylierten, aminofunktionellen Polybutadiens mit 31,4 g Butylacetat unter Argon vorgelegt. Dann wurden 0,016 g Zitronensäure, 0,31 g Wasser, 1,57 g Raney-Nickel (Aluminium/Nickel 50/50) und 0,31 g Palladiumkatalysator Pd-Kat/C (5% Pd auf Aktivkohle, 50% Wassergehalt) zugegeben. Nach aufheizen auf 120 °C wird unter starkem Argonstrom und Rühren 35 h lang 0,025 - 0,05 lpm (lpm = Liter pro Minute) Wasserstoff eingeleitet. Das Produkt wird nochmals mit 12,5 g Xylol verdünnt und nach Zugabe von 1 g Filterhilfe Harbolite 800 heiß filtriert. Nach der Destillation im Vakuum erhält man ein braunschwarzes Produkt, welches beim Erkalten fest wird. Der Hydriergrad beträgt 48,1 %. Die Auswertung mittels GPC ergab: $M_w$ = 17776 g/mol ; $M_n$ = 4925 g/mol ; $M_w/M_n$ = 3,61.

Beispiel D5

In einem 250 ml Vierhalskolben wurden 31,8 g des in Beispiel C3 hergestellten alkoxylierten, hydroxylierten, aminofunktionellen Polybutadiens mit 1,59 g Raney-Nickel (Aluminium/Nickel 50/50) und 0,32 g Palladiumkatalysator Pd-Kat/C (5% Pd auf Aktivkohle, 50% Wassergehalt) unter Argon vorgelegt. Nach aufheizen auf 120 °C wird unter starkem Argonstrom und Rühren 37 h lang 0,025 - 0,05 lpm (lpm = Liter pro Minute) Wasserstoff eingeleitet. Das Produkt wird mit 30 g Xylol verdünnt und nach Zugabe von 1 g Filterhilfe Harbolite 800 heiß filtriert. Nach der Destillation im Vakuum erhält man ein braunschwarzes Produkt, welches beim Erkalten zähflüssig wird. Der Hydriergrad beträgt 59,2 %. Die Auswertung mittels GPC ergab: $M_w$ = 18536 g/mol ; $M_n$ = 4821 g/mol ; $M_w/M_n$ = 3,84

Beispiel D6

In einem 500 ml Vierhalskolben wurden 50 g des in Beispiel C1 hergestellten alkoxylierten, hydroxylierten, aminofunktionellen Polybutadiens WO 1011 mit 150 g Xylol unter Argon vorgelegt. Dann wurden 1,5 g Rh-100 zugegeben. Nach aufheizen auf 120 °C wird unter starkem Argonstrom und Rühren 20 h lang 0,025 - 0,05 lpm (lpm = Liter pro Minute) Wasserstoff eingeleitet. Das Produkt wird nach Zugabe von 1,5 g Filterhilfe Harbolite 800 heiß filtriert. Nach der Destillation

im Vakuum erhält man ein braunschwarzes Produkt, welches beim Erkalten fest wird. Der Hydriergrad beträgt 97,9 %. Die Auswertung mittels GPC ergab: $M_w$ = 32451 g/mol ; $M_n$ = 9190 g/mol ; $M_w/M_n$ = 3,53.

Beispiel D7

In einem 500 ml Vierhalskolben wurden 50 g des in Beispiel C3 hergestellten alkoxylierten, hydroxylierten, aminofunktionellen Polybutadiens WD 995 mit 150 g Butylacetat unter Argon vorgelegt. Dann wurden 1,5 g Rh-100 zugegeben. Nach aufheizen auf 120 °C wird unter starkem Argonstrom und Rühren 20 h lang 0,025 - 0,05 lpm (lpm = Liter pro Minute) Wasserstoff eingeleitet. Das Produkt wird nach Zugabe von 1,5 g Filterhilfe Harbolite 800 heiß filtriert. Nach der Destillation im Vakuum erhält man ein braunschwarzes Produkt, welches beim Erkalten zähflüssig wird. Der Hydriergrad beträgt 47,0 %. Die Auswertung mittels GPC ergab: $M_w$ = 24962 g/mol ; $M_n$ = 6463 g/mol ; $M_w/M_n$ = 3,86.

## Patentansprüche

1. Verfahren zur Herstellung von einem oder mehreren hydrierten polyethermodifizierten aminofunktionellen Polybutadienen, umfassend die Schritte:

    a) Umsetzung mindestens eines Polybutadiens (A) mit mindestens einem Epoxidierungsreagenz (B) zu mindestens einem epoxyfunktionellen Polybutadien (C);
    b) Umsetzung des mindestens einen epoxyfunktionellen Polybutadiens (C) mit mindestens einer aminofunktionellen Verbindung (D) zu mindestens einem hydroxy- und aminofunktionellen Polybutadien (E);
    c) Umsetzung des mindestens einen hydroxy- und aminofunktionellen Polybutadiens (E) mit mindestens einer epoxyfunktionellen Verbindung (F) zu mindestens einem polyethermodifizierten aminofunktionellen Polybutadien (G);
    d) Hydrierung des mindestens einen polyethermodifizierten aminofunktionellen Polybutadiens (G) zu mindestens einem hydrierten polyethermodifizierten aminofunktionellen Polybutadien (H).

2. Verfahren nach Anspruch 1, weiterhin umfassend mindestens einen der folgenden Schritte cc) und dd):

    cc) Umsetzung mindestens eines polyethermodifizierten aminofunktionellen Polybutadiens (G) ohne endverkappte Polyetherreste mit mindestens einem Endverkappungsreagenz (I) zu mindestens einem polyethermodifizierten aminofunktionellen Polybutadien (G) enthaltend endverkappte Polyetherreste;
    dd) Umsetzung mindestens eines hydrierten aminofunktionellen polyethermodifizierten Polybutadiens (H) mit mindestens einem Endverkappungsreagenz (I) zu mindestens einem hydrierten polyethermodifizierten aminofunktionellen Polybutadien (H) enthaltend endverkappte Polyetherreste;

    und/oder mindestens einen der folgenden Schritte e) und f):

    e) Farbaufhellung des mindestens einen hydrierten polyethermodifizierten aminofunktionellen Polybutadiens (H);
    f) Umsetzung zumindest eines Teils der Aminogruppen des mindestens einen hydrierten polyethermodifizierten aminofunktionellen Polybutadiens (H) zu quartären Ammoniumgruppen mittels einer Säure und/oder eines Quaternisierungsreagenz.

3. Verfahren nach einem der Ansprüche 1 oder 2, **dadurch gekennzeichnet, dass** von >0 % bis <100 %, bevorzugt von >0 % bis 70 %, bevorzugter von 1 % bis 50 %, noch bevorzugter von 2 % bis 40 %, noch bevorzugter von 3 % bis 30 % und am bevorzugtesten von 4 % bis 20 % der Doppelbindungen des mindestens einen Polybutadiens (A) epoxidiert werden.

4. Verfahren nach einem der Ansprüche 1 bis 3, **dadurch gekennzeichnet, dass** das mindestens eine Epoxidierungsreagenz (B) Perameisensäure enthält, welche vorzugweise *in situ* aus Ameisensäure und Wasserstoffperoxid gebildet wird.

5. Verfahren nach einem der Ansprüche 1 bis 4, **dadurch gekennzeichnet, dass** die mindestens eine aminofunktionelle Verbindung (D) ausgewählt ist aus Verbindungen mit mindestens einer primären und/oder mindestens einer sekundären Aminogruppe; bevorzugt aus organischen Verbindungen mit mindestens einer primären und/oder mindestens einer sekundären Aminogruppe; bevorzugter aus organischen Verbindungen mit 1 bis 22 Kohlenstoffatomen sowie mindestens einer primären und/oder mindestens einer sekundären Aminogruppe; noch bevorzugter aus organischen Verbindungen mit 1 bis 12 Kohlenstoffatomen sowie mindestens einer primären und/oder mindestens einer sekundären Aminogruppe; am bevorzugtesten aus der Gruppe bestehend aus Butylamin, Isobutylamin, Hexylamin, Octylamin, 2-Ethylhexylamin, Decylamin, Laurylamin, Ethanolamin, Isopropanolamin, Diethanolamin, Diisopropanolamin, N-Methylethanolamin, N-Methylisopropanolamin, 2-Amino-2-methyl-1-propanol, 2-Amino-2-ethyl-1,3-propandiol, Tris(hydroxymethyl)aminomethan Tris(hydroxymethyl)aminomethan (TRIS, 2-Amino-2-(hydroxymethyl)propan-1,3-diol), Morpholin, Piperidin, Cyclohexylamin, N,N-Dimethylaminopropylamin (DMAPA) und Benzylamin.

**6.** Verfahren nach einem der Ansprüche 1 bis 5, **dadurch gekennzeichnet, dass** die mindestens eine im Schritt c) eingesetzte epoxyfunktionelle Verbindung ausgewählt ist

a. aus der Gruppe der Alkylenoxide

bevorzugt aus der Gruppe der Alkylenoxide mit 2 bis 18 Kohlenstoffatomen,
am bevorzugtesten ausgewählt aus der Gruppe bestehend aus Ethylenoxid, Propylenoxid, 1-Butylenoxid, cis-2-Butylenoxid, trans-2-Butylenoxid, Isobutylenoxid und Styroloxid,

und/oder
b. aus der Gruppe der Glycidylverbindungen,

bevorzugt aus der Gruppe der monofunktionellen Glycidylverbindungen,
am bevorzugtesten aus der Gruppe bestehend aus Phenylglycidylether, o-Kresylglycidylether, tert-Butylphenylglycidylether, Allylglycidylether, Butylglycidylether, 2-Ethylhexylglycidylether, $C_{12}/C_{14}$-Fettalkoholglycidylether und $C_{13}/C_{15}$-Fettalkoholglycidylether.

**7.** Verfahren nach einem der Ansprüche 1 bis 6, **dadurch gekennzeichnet, dass** im Verfahrensschritt d) von den Doppelbindungen des polyethermodifizierten Polybutadiens (G) mindestens 30%, bevorzugt mindestens 60%, bevorzugter mindestens 90%, besonders bevorzugt mindestens 95% hydriert werden.

**8.** Verfahren nach einem der Ansprüche 1 bis 7, **dadurch gekennzeichnet, dass** Schritt d) mit Wasserstoff in Gegenwart mindestens eines Hydrierkatalysators, vorzugsweise auf Basis von Nickel, Palladium, Rhodium und/oder Ruthenium, insbesondere ausgewählt aus der Gruppe bestehend aus Raney-Nickel, Palladium auf Aktivkohle und Wilkinson-Katalysator, durchgeführt wird.

**9.** Hydriertes polyethermodifiziertes aminofunktionelles Polybutadien (H) erhältlich nach einem Verfahren nach einem der Ansprüche 1 bis 8.

**10.** Hydriertes polyethermodifiziertes aminofunktionelles Polybutadien (H), vorzugsweise nach Anspruch 9, **dadurch gekennzeichnet, dass** das hydrierte polyethermodifizierte aminofunktionelle Polybutadien (H) Einheiten ausgewählt

sowohl aus der Gruppe bestehend aus den zweibindigen Resten (S), (T) und (U):

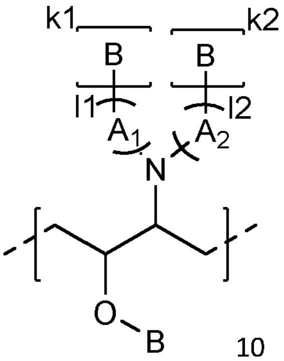

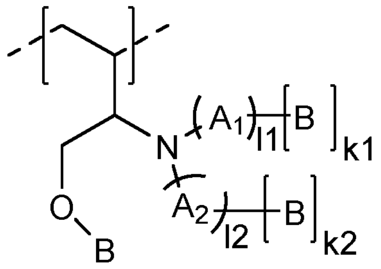

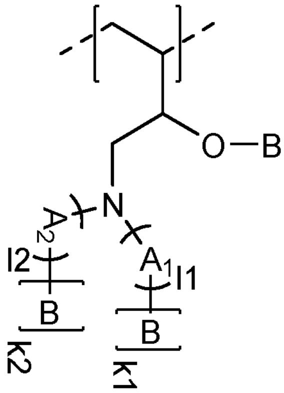

(S) (T) (U)

als auch aus der Gruppe bestehend aus den zweibindigen Resten (V) und (W):

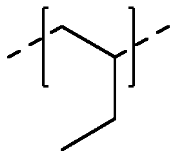

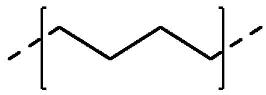

(V) (W)

und optional aus der Gruppe bestehend aus den zweibindigen Resten (X), (Y) und (Z):

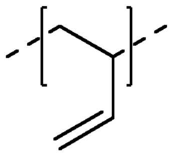

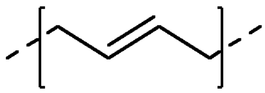

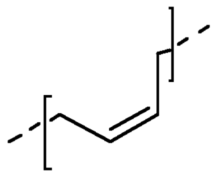

(X) (Y) (Z)

umfasst;
wobei

$A_1$ und $A_2$ jeweils unabhängig voneinander organische Reste, bevorzugt mit 1 bis 22 Kohlenstoffatomen, am bevorzugtesten mit 1 bis 12 Kohlenstoffatomen, sind, wobei die Reste $A_1$ und $A_2$ kovalent miteinander verbunden sein können,
B jeweils unabhängig voneinander ein Rest der Formel (4a) ist,

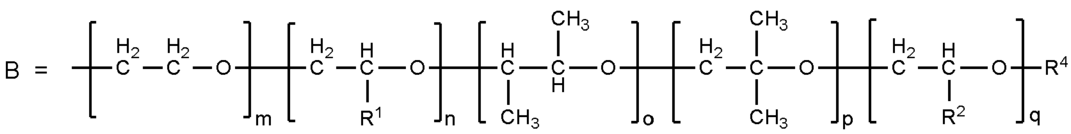

Formel (4a);

bevorzugt jeweils unabhängig voneinander ein Rest der Formel (4b) ist,

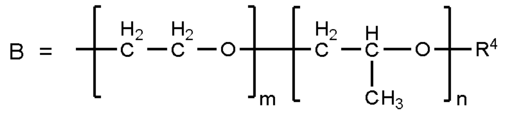

Formel (4b);

am bevorzugtesten jeweils unabhängig voneinander ein Rest der Formel (4c) ist,

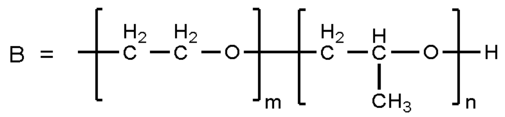

Formel (4c);

$R^1$ jeweils unabhängig voneinander ein einbindiger Kohlenwasserstoffrest mit 1 bis 16 Kohlenstoffatomen ist;

bevorzugt jeweils unabhängig voneinander ein Alkylrest mit 1 bis 16 Kohlenstoffatomen oder ein Phenylrest ist;
am bevorzugtesten jeweils unabhängig voneinander ein Methylrest, ein Ethylrest oder ein Phenylrest ist;

$R^2$ ein Rest der Formel $-CH_2-O-R^3$ ist;
$R^3$ jeweils unabhängig voneinander ein einbindiger Kohlenwasserstoffrest mit 3 bis 18 Kohlenstoffatomen ist;

bevorzugt jeweils unabhängig voneinander ein Allylrest, ein Butylrest, ein Alkylrest mit 8 bis 15 Kohlenstoffatomen oder ein Phenylrest, der mit einbindigen Resten ausgewählt aus Kohlenwasserstoffresten mit 1 bis 4 Kohlenstoffatomen substituiert sein kann, ist;
am bevorzugtesten ein tert-Butylphenylrest oder ein o-Kresylrest ist;

$R^4$ jeweils unabhängig voneinander ein einbindiger organischer Rest mit 1 bis 18 Kohlenstoffatomen oder Wasserstoff, bevorzugt Wasserstoff ist;

und

k1 und k2 jeweils unabhängig voneinander ganze Zahlen von 0 bis 8, bevorzugt von 0 bis 6, am bevorzugtesten von 0 bis 4 sind;
l1 und l2 ganze Zahlen und jeweils unabhängig voneinander entweder 0 oder 1 sind;
m, n, o, p und q jeweils unabhängig voneinander rationale Zahlen von 0 bis 300, bevorzugt von 0 bis 200, am bevorzugtesten von 0 bis 100 sind, mit der Maßgabe, dass die Summe aus m, n, o, p und q größer als 1, bevorzugt größer als 5, am bevorzugtesten größer als 10 ist;
und jede Permutation der Einheiten im Rest B, deren Anzahl mit den Indizes m, n, o, p beziehungsweise q angegeben ist, mitumfasst ist.

**11.** Hydriertes polyethermodifiziertes aminofunktionelles Polybutadien (H) nach Anspruch 9 oder 10, **dadurch gekennzeichnet, dass** die Summe aller Einheiten (S), (T) und (U) dividiert durch die Summe aller Einheiten (S), (T), (U), (V), (W), (X), (Y) und (Z) von >0 % bis 70 %, bevorzugter von 1 % bis 50 %, noch bevorzugter von 2 % bis 40 %, noch bevorzugter von 3 % bis 30 %, am bevorzugtesten von 4 % bis 20 % beträgt.

**12.** Hydriertes polyethermodifiziertes aminofunktionelles Polybutadien (H) nach einem der Ansprüche 9 bis 11, **dadurch gekennzeichnet, dass** die zahlenmittlere Molmasse ($M_n$) des Polybutadienteils von 200 g/mol bis 20000 g/mol, bevorzugt von 500 g/mol bis 10000 g/mol, am bevorzugtesten von 700 g/mol bis 5000 g/mol beträgt, bestimmt wie in der Beschreibung angegeben.

**13.** Hydriertes polyethermodifiziertes aminofunktionelles Polybutadien (H) nach einem der Ansprüche 9 bis 12, **dadurch gekennzeichnet, dass** die mittlere Molmasse des Rests B von 30 g/mol bis 20000 g/mol, bevorzugt von 50 g/mol bis 10000 g/mol, bevorzugter von 100 g/mol bis 5000 g/mol, am bevorzugtesten von 150 g/mol bis 1000 g/mol beträgt, bestimmt wie in der Beschreibung angegeben.

**14.** Hydriertes polyethermodifiziertes aminofunktionelles Polybutadien (H) nach einem der Ansprüche 9 bis 13, **dadurch gekennzeichnet, dass** die zahlenmittlere Molmasse ($M_n$) des hydrierten polyethermodifizierten aminofunktionellen Polybutadiens (H) bevorzugt von 1000 g/mol bis 50000 g/mol, bevorzugter von 1500 g/mol bis 40000 g/mol, noch bevorzugter von 2000 g/mol bis 30000 g/mol, am bevorzugtesten von 3000 g/mol bis 10000 g/mol beträgt, bestimmt wie in der Beschreibung angegeben.

**Claims**

**1.** Process for preparing one or more hydrogenated polyether-modified amino-functional polybutadienes, comprising the steps of:

a) reacting at least one polybutadiene (A) with at least one epoxidizing reagent (B) to give at least one epoxy-functional polybutadiene (C);
b) reacting the at least one epoxy-functional polybutadiene (C) with at least one amino-functional compound (D) to give at least one hydroxy- and amino-functional polybutadiene (E);
c) reacting the at least one hydroxy- and amino-functional polybutadiene (E) with at least one epoxy-functional compound (F) to give at least one polyether-modified amino-functional polybutadiene (G);
d) hydrogenating the at least one polyether-modified amino-functional polybutadiene (G) to give at least one hydrogenated polyether-modified amino-functional polybutadiene (H).

**2.** Process according to Claim 1, further comprising at least one of the following steps cc) and dd):

cc) reacting at least one polyether-modified amino-functional polybutadiene (G) without end-capped polyether radicals with at least one end-capping reagent (I) to give at least one polyether-modified amino-functional polybutadiene (G) comprising end-capped polyether radicals;
dd) reacting at least one hydrogenated amino-functional polyether-modified polybutadiene (H) with at least one end-capping reagent (I) to give at least one hydrogenated polyether-modified amino-functional polybutadiene (H) comprising end-capped polyether radicals;

and/or at least one of the following steps e) and f):

e) colour lightening of the at least one hydrogenated polyether-modified amino-functional polybutadiene (H);
f) converting at least some amino groups of the at least one hydrogenated polyether-modified amino-functional polybutadiene (H) to quaternary ammonium groups by means of an acid and/or a quaternizing reagent.

**3.** Process according to either of Claims 1 or 2, **characterized in that** from >0% to <100%, preferably from >0% to 70%, more preferably from 1% to 50%, still more preferably from 2% to 40%, even more preferably from 3% to 30% and most preferably from 4% to 20% of the double bonds of the at least one polybutadiene (A) are epoxidized.

**4.** Process according to any of Claims 1 to 3, **characterized in that** the at least one epoxidizing reagent (B) contains performic acid which is preferably formed *in situ* from formic acid and hydrogen peroxide.

**5.** Process according to any of Claims 1 to 4, **characterized in that** the at least one amino-functional compound (D) is selected from compounds having at least one primary and/or at least one secondary amino group; preferably from organic compounds having at least one primary and/or at least one secondary amino group; more preferably from organic compounds having 1 to 22 carbon atoms and at least one primary and/or at least one secondary amino group; even more preferably from organic compounds having 1 to 12 carbon atoms and at least one primary and/or at least one secondary amino group; most preferably from the group consisting of butylamine, isobutylamine, hexylamine, octylamine, 2-ethylhexylamine, decylamine, laurylamine, ethanolamine, isopropanolamine, diethanolamine, diisopropanolamine, N-methylethanolamine, N-methylisopropanolamine, 2-amino-2-methyl-1-propanol, 2-amino-2-ethyl-1,3-propanediol, tris(hydroxymethyl)aminomethane tris(hydroxymethyl)aminomethane (TRIS, 2-amino-2-(hydroxymethyl)propane-1,3-diol), morpholine, piperidine, cyclohexylamine, N,N-dimethylaminopropylamine (DMAPA) and benzylamine.

**6.** Process according to any of Claims 1 to 5, **characterized in that** the at least one epoxy-functional compound used in step c) is selected

a. from the group of the alkylene oxides

preferably from the group of the alkylene oxides having 2 to 18 carbon atoms,
most preferably selected from the group consisting of ethylene oxide, propylene oxide, 1-butylene oxide, *cis*-2-butylene oxide, trans-2-butylene oxide, isobutylene oxide and styrene oxide,

and/or
b. from the group of the glycidyl compounds,

preferably from the group of the monofunctional glycidyl compounds,
most preferably from the group consisting of phenyl glycidyl ether, o-cresyl glycidyl ether, tert-butylphenyl glycidyl ether, allyl glycidyl ether, butyl glycidyl ether, 2-ethylhexyl glycidyl ether, $C_{12}/C_{14}$ fatty alcohol glycidyl ether and $C_{13}/C_{15}$ fatty alcohol glycidyl ether.

**7.** Process according to any of Claims 1 to 6, **characterized in that** in process step d), at least 30%, preferably at least 60%, more preferably at least 90%, particularly preferably at least 95% of the double bonds of the polyether-modified polybutadiene (G) are hydrogenated.

**8.** Process according to any of Claims 1 to 7, **characterized in that** step d) is carried out with hydrogen in the presence of at least one hydrogenation catalyst, preferably based on nickel, palladium, rhodium and/or ruthenium, selected in particular from the group consisting of Raney nickel, palladium on activated carbon and Wilkinson's catalyst.

**9.** Hydrogenated polyether-modified amino-functional polybutadiene (H), obtainable by a process according to any of Claims 1 to 8.

**10.** Hydrogenated polyether-modified amino-functional polybutadiene (H), preferably according to Claim 9, **characterized in that** the hydrogenated polyether-modified amino-functional polybutadiene (H) comprises units selected

both from the group consisting of the divalent radicals (S), (T) and (U):

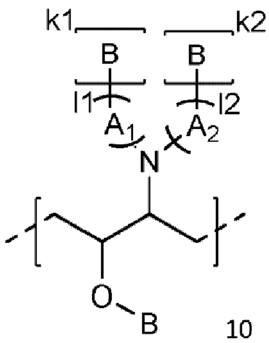
10

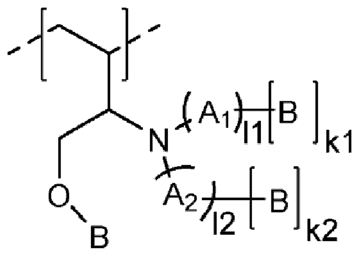

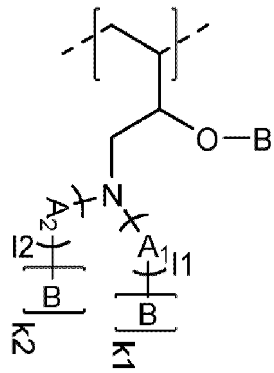

(S) (T) (U)

and from the group consisting of the divalent radicals (V) and (W) :

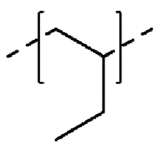

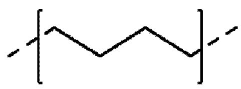

(V) (W)

and optionally from the group consisting of the divalent radicals (X), (Y) and (Z):

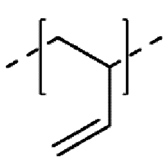

(X)

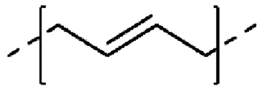

(Y)

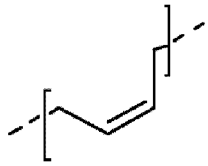

(Z) ;

where

$A_1$ and $A_2$ are in each case independently organic radicals, preferably having 1 to 22 carbon atoms, most preferably having 1 to 12 carbon atoms, where the radicals $A_1$ and $A_2$ may be covalently bonded to each other, B is in each case independently a radical of the formula (4a),

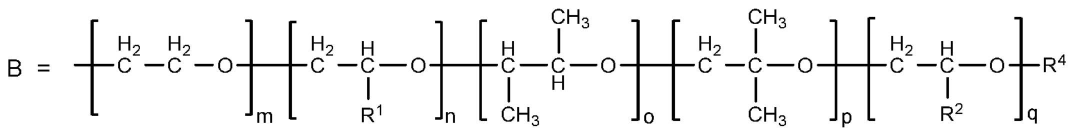

Formula (4a);

preferably is in each case independently a radical of the formula (4b),

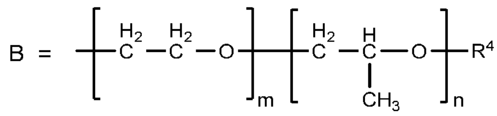

Formula (4b);

most preferably is in each case independently a radical of the formula (4c),

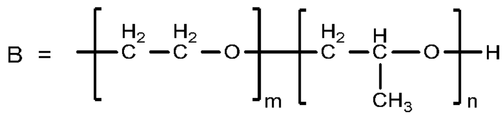

Formula (4c);

$R^1$ is in each case independently a monovalent hydrocarbon radical having 1 to 16 carbon atoms; preferably is in each case independently an alkyl radical having 1 to 16 carbon atoms or a phenyl radical; most preferably is in each case independently a methyl radical, an ethyl radical or a phenyl radical;
$R^2$ is a radical of the formula $-CH_2-Q-R^3$;
$R^3$ is in each case independently a monovalent hydrocarbon radical having 3 to 18 carbon atoms; preferably is in each case independently an allyl radical, a butyl radical, an alkyl radical having 8 to 15 carbon atoms or a phenyl radical that may be substituted by monovalent radicals selected from hydrocarbon radicals having 1 to 4 carbon atoms;
most preferably is a tert-butylphenyl radical or an o-cresyl radical;
$R^4$ is in each case independently a monovalent organic radical having 1 to 18 carbon atoms or hydrogen, preferably hydrogen;
and
k1 and k2 are in each case independently integers from 0 to 8, preferably from 0 to 6, most preferably from 0 to 4;
11 and 12 are integers and in each case independently either 0 or 1;
m, n, o, p and q are in each case independently rational numbers from 0 to 300, preferably from 0 to 200, most preferably from 0 to 100, with the proviso that the sum total of m, n, o, p and q is greater than 1, preferably greater than 5, most preferably greater than 10;
and each permutation of the units in the radical B, the number of which is specified by the indices m, n, o, p and q, is included.

**11.** Hydrogenated polyether-modified amino-functional polybutadiene (H) according to Claim 9 or 10, **characterized in that** the sum total of all units (S), (T) and (U) divided by the sum total of all units (S), (T), (U), (V), (W), (X), (Y) and (Z) is from >0% to 70%, more preferably from 1% to 50%, still more preferably from 2% to 40%, even more preferably from 3% to 30%, most preferably from 4% to 20%.

**12.** Hydrogenated polyether-modified amino-functional polybutadiene (H) according to any of Claims 9 to 11, **characterized in that** the number-average molar mass ($M_n$) of the polybutadiene moiety is from 200 g/mol to 20 000 g/mol, preferably from 500 g/mol to 10 000 g/mol, most preferably from 700 g/mol to 5000 g/mol, determined as specified in the description.

**13.** Hydrogenated polyether-modified amino-functional polybutadiene (H) according to any of Claims 9 to 12, **characterized in that** the average molar mass of the B radical is from 30 g/mol to 20 000 g/mol, preferably from 50 g/mol to 10 000 g/mol, more preferably from 100 g/mol to 5000 g/mol, most preferably from 150 g/mol to 1000 g/mol, determined as specified in the description.

**14.** Hydrogenated polyether-modified amino-functional polybutadiene (H) according to any of Claims 9 to 13, **characterized in that** the number-average molar mass ($M_n$) of the hydrogenated polyether-modified amino-functional polybutadiene (H) is preferably from 1000 g/mol to 50 000 g/mol, more preferably from 1500 g/mol to 40 000 g/mol, even more preferably from 2000 g/mol to 30 000 g/mol, most preferably from 3000 g/mol to 10 000 g/mol, determined as specified in the description.

## Revendications

**1.** Procédé de préparation d'un ou de plusieurs polybutadiènes hydrogénés à fonctionnalité amino, modifiés par polyéther, comprenant les étapes :

a) transformation d'au moins un polybutadiène (A) avec au moins un réactif d'époxydation (B) en au moins un polybutadiène à fonctionnalité époxy (C) ;
b) transformation dudit au moins un polybutadiène à fonctionnalité époxy (C) avec au moins un composé à fonctionnalité amino (D) en au moins un polybutadiène à fonctionnalité hydroxy et amino (E) ;
c) transformation dudit au moins un polybutadiène à fonctionnalité hydroxy et amino (E) avec au moins un composé à fonctionnalité époxy (F) en au moins un polybutadiène à fonctionnalité amino, modifié par polyéther (G) ;
d) hydrogénation dudit au moins un polybutadiène à fonctionnalité amino, modifié par polyéther (G) en au moins un polybutadiène hydrogéné à fonctionnalité amino, modifié par polyéther (H).

**2.** Procédé selon la revendication 1, comprenant en outre au moins l'une des étapes suivantes cc) et dd) :

cc) transformation d'au moins un polybutadiène à fonctionnalité amino, modifié par polyéther (G) sans radicaux polyéther à coiffage terminal avec au moins un réactif de coiffage terminal (I) en au moins un polybutadiène à fonctionnalité amino, modifié par polyéther (G) contenant des radicaux polyéther à coiffage terminal ;
dd) transformation d'au moins un polybutadiène hydrogéné à fonctionnalité amino, modifié par polyéther (H) avec au moins un réactif de coiffage terminal (I) en au moins un polybutadiène hydrogéné à fonctionnalité amino, modifié par polyéther (H) contenant des radicaux polyéther à coiffage terminal ;

et/ou au moins l'une des étapes suivantes e) et f) :

e) éclaircissement dudit au moins un polybutadiène hydrogéné à fonctionnalité amino, modifié par polyéther (H) ;
f) transformation d'au moins une partie des groupes amino dudit au moins un polybutadiène hydrogéné à fonctionnalité amino, modifié par polyéther (H) en groupes ammonium quaternaire au moyen d'un acide et/ou d'un réactif de quaternisation.

**3.** Procédé selon l'une des revendications 1 ou 2, **caractérisé en ce que** >0% à <100%, de préférence >0% à 70%, plus préférablement 1% à 50%, encore plus préférablement 2% à 40%, encore plus préférablement 3% à 30% et le plus préférablement 4% à 20% des doubles liaisons dudit au moins un polybutadiène (A) ont été époxydés.

**4.** Procédé selon l'une des revendications 1 à 3, **caractérisé en ce que** ledit au moins un réactif d'époxydation (B)

contient de l'acide performique, qui est de préférence formé *in situ* à partir d'acide formique et de peroxyde d'hydrogène.

5. Procédé selon l'une des revendications 1 à 4, **caractérisé en ce que** ledit au moins un composé à fonctionnalité amino (D) est choisi parmi les composés présentant au moins un groupe amino primaire et/ou au moins un groupe amino secondaire ; de préférence parmi les composés organiques présentant au moins un groupe amino primaire et/ou au moins un groupe amino secondaire ; plus préférablement parmi les composés organiques comprenant 1 à 22 atomes de carbone ainsi qu'au moins un groupe amino primaire et/ou au moins un groupe amino secondaire ; encore plus préférablement parmi les composés organiques comprenant 1 à 12 atomes de carbone ainsi qu'au moins un groupe amino primaire et/ou au moins un groupe amino secondaire ; le plus préférablement dans le groupe constitué par la butylamine, l'isobutylamine, l'hexylamine, l'octylamine, la 2-éthylhexylamine, la décylamine, la laurylamine, l'éthanolamine, l'isopropanolamine, la diéthanolamine, la diisopropanolamine, la N-méthyléthanolamine, la N-méthylisopropanolamine, le 2-amino-2-méthyl-1-propanol, le 2-amino-2-éthyl-1,3-propanediol, le tris(hydroxyméthyl)aminométhane le tris(hydroxyméthyl)aminométhane (TRIS, 2-amino-2-(hydroxyméthyl)propane-1,3-diol), la morpholine, la pipéridine, la cyclohexylamine, la N,N-diméthylaminopropylamine (DMAPA) et la benzylamine.

6. Procédé selon l'une des revendications 1 à 5, **caractérisé en ce que** ledit au moins un composé à fonctionnalité époxy utilisé dans l'étape c) est choisi

   a. dans le groupe des oxydes d'alkylène

      de préférence dans le groupe des oxydes d'alkylène comprenant 2 à 18 atomes de carbone,
      le plus préférablement dans le groupe constitué par l'oxyde d'éthylène, l'oxyde de propylène, l'oxyde de 1-butylène, l'oxyde de cis-2-butylène, l'oxyde de *trans*-2-butylène, l'oxyde d'isobutylène et l'oxyde de styrène, et/ou

   b. dans le groupe des composés de glycidyle,

      de préférence dans le groupe des composés monofonctionnels de glycidyle,
      le plus préférablement dans le groupe constitué par le phénylglycidyléther, l'o-crésylglycidyléther, le tert-butylphénylglycidyléther, l'allylglycidyléther, le butylglycidyléther, le 2-éthylhexylglycidyléther, les glycidyléthers d'alcools gras en $C_{12}/C_{14}$ et les glycidyléthers d'alcools gras en $C_{13}/C_{15}$.

7. Procédé selon l'une des revendications 1 à 6, **caractérisé en ce que**, dans l'étape d), au moins 30%, de préférence au moins 60%, plus préférablement au moins 90%, de manière particulièrement préférée au moins 95% des doubles liaisons du polybutadiène modifié par polyéther (G) sont hydrogénés.

8. Procédé selon l'une des revendications 1 à 7, **caractérisé en ce que** l'étape d) est réalisée avec de l'hydrogène en présence d'au moins un catalyseur d'hydrogénation, de préférence à base de nickel, de palladium, de rhodium et/ou de ruthénium, en particulier choisi dans le groupe constitué par le nickel de Raney, le palladium sur charbon actif ou le catalyseur de Wilkinson.

9. Polybutadiène hydrogéné à fonctionnalité amino, modifié par polyéther (H) pouvant être obtenu par un procédé selon l'une des revendications 1 à 8.

10. Polybutadiène hydrogéné à fonctionnalité amino, modifié par polyéther (H), de préférence selon la revendication 9, **caractérisé en ce que** le polybutadiène hydrogéné à fonctionnalité amino, modifié par polyéther (H) comprend des motifs choisis

    que dans le groupe constitué par les radicaux bivalents (S), (T) et (U) :

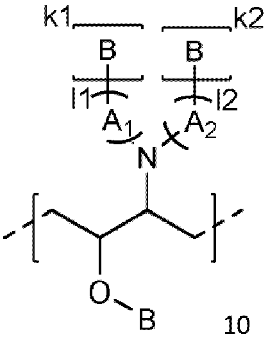
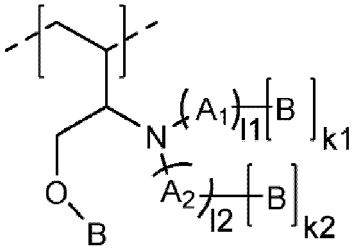
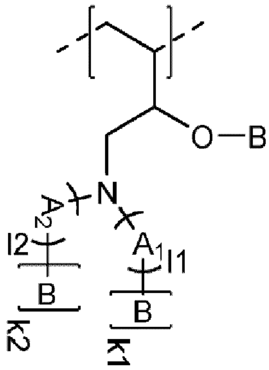

(S) (T) (U)

ainsi que dans le groupe constitué par les radicaux bivalents (V) et (W) :

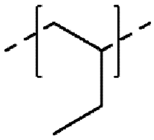
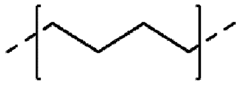

(V) (W)

et éventuellement dans le groupe constitué par les radicaux bivalents (X), (Y) et (Z) :

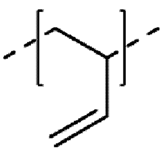
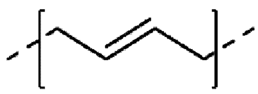
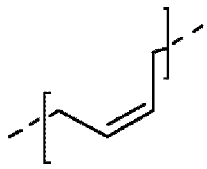

(X) (Y) (Z) ;

dans lesquels

$A_1$ et $A_2$ représentent, à chaque fois indépendamment l'un de l'autre, des radicaux organiques, comprenant de préférence 1 à 22 atomes de carbone, le plus préférablement 1 à 12 atomes de carbone, les radicaux $A_1$ et $A_2$ pouvant être reliés l'un à l'autre par covalence, B représente, à chaque fois indépendamment, un radical de formule (4a),

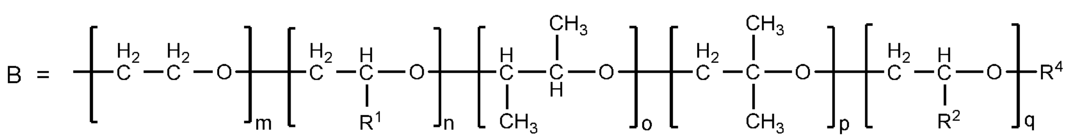

Formule (4a) ;

de préférence, à chaque fois indépendamment, un radical de formule (4b),

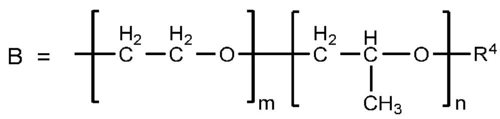

Formule (4b) ;

le plus préférablement, à chaque fois indépendamment, un radical de formule (4c),

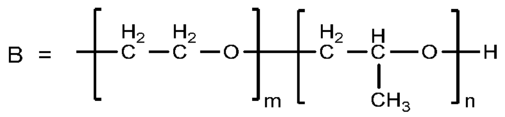

Formule (4c) ;

$R^1$ représente, à chaque fois indépendamment, un radical hydrocarboné monovalent comprenant 1 à 16 atomes de carbone ;
de préférence, à chaque fois indépendamment, un radical alkyle comprenant 1 à 16 atomes de carbone ou un radical phényle ;
le plus préférablement, à chaque fois indépendamment, un radical méthyle, un radical éthyle ou un radical phényle ;
$R^2$ représente un radical de formule $-CH_2-O-R^3$ ;
$R^3$ représente, à chaque fois indépendamment, un radical hydrocarboné monovalent comprenant 3 à 18 atomes de carbone ;
de préférence, à chaque fois indépendamment, un radical allyle, un radical butyle, un radical alkyle comprenant 8 à 15 atomes de carbone ou un radical phényle qui peut être substitué par des radicaux monovalents choisis parmi les radicaux hydrocarbonés comprenant 1 à 4 atomes de carbone ;
le plus préférablement un radical tert-butylphényle ou un radical o-crésyle ;
$R^4$ représente, à chaque fois indépendamment, un radical organique monovalent comprenant 1 à 18 atomes de carbone ou hydrogène, de préférence hydrogène ;
et
k1 et k2 représentent, à chaque fois indépendamment l'un de l'autre, des nombres entiers de 0 à 8, de préférence de 0 à 6, le plus préférablement de 0 à 4 ;
l1 et l2 représentent des nombres entiers et à chaque fois indépendamment l'un de l'autre soit 0 soit 1 ;
m, n, o, p et q représentent, à chaque fois indépendamment les uns des autres, des nombres rationnels de 0 à 300, de préférence de 0 à 200, le plus préférablement de 0 à 100, étant entendu que la somme de m, n, o, p et q est supérieure à 1, de préférence supérieure à 5, le plus préférablement supérieure à 10 ;
et chaque permutation des motifs dans le radicaux B, dont le nombre est indiqué par les indices m, n, o, p ou, selon le cas, q, est incluse.

**11.** Polybutadiène hydrogéné à fonctionnalité amino, modifié par polyéther (H) selon la revendication 9 ou 10, **caractérisé en ce que** la somme de tous les motifs (S), (T) et (U) divisée par la somme de tous les motifs (S), (T), (U), (V), (W), (X), (Y) et (Z) vaut >0% à 70%, plus préférablement 1% à 50%, encore plus préférablement 2% à 40%, encore plus préférablement 3% à 30%, le plus préférablement 4% à 20%.

**12.** Polybutadiène hydrogéné à fonctionnalité amino, modifié par polyéther (H) selon l'une des revendications 9 à 11, **caractérisé en ce que** la masse molaire moyenne en nombre ($M_n$) de la partie de polybutadiène est de 200 g/mole à 20.000 g/mole, de préférence de 500 g/mole à 10.000 g/mole, le plus préférablement de 700 g/mole à 5000 g/mole, déterminée comme indiqué dans la description.

**13.** Polybutadiène hydrogéné à fonctionnalité amino, modifié par polyéther (H) selon l'une des revendications 9 à 12, **caractérisé en ce que** la masse molaire moyenne du radical B est de 30 g/mole à 20.000 g/mole, de préférence de 50 g/mole à 10.000 g/mole, plus préférablement de 100 g/mole à 5000 g/mole, le plus préférablement de 150 g/mole à 1000 g/mole, déterminée comme indiqué dans la description.

**14.** Polybutadiène hydrogéné à fonctionnalité amino, modifié par polyéther (H) selon l'une des revendications 9 à 13, **caractérisé en ce que** la masse molaire moyenne en nombre ($M_n$) du polybutadiène hydrogéné à fonctionnalité amino, modifié par polyéther (H) est de préférence de 1000 g/mole à 50.000 g/mole, plus préférablement de 1500 g/mole à 40.000 g/mole, encore plus préférablement de 2000 g/mole à 30.000 g/mole, le plus préférablement de 3000 g/mole à 10.000 g/mole, déterminée comme indiqué dans la description.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2011038003 B
- JP 2002105209 B
- US 4994621 A
- EP 2003156 A1
- JP 63288295 B
- JP 57205596 B
- DE 2554093
- DE 2943879
- DE 2732736
- JP 49055733 B
- JP 48051989 B
- JP 53117030 B
- DE 2734413
- JP 05117556 B
- EP 0351135 A
- EP 0274389 A
- DE 3305964
- DD 296286
- DE 2459115 A1
- DE 1248301 B
- DE 2457646 A1
- DE 2637767 A1
- EP 0279766 A1
- EP 0545844 A1
- CN 101538338
- JP 2004346310 B
- DD 253627
- WO 2016142249 A1
- US 5158922 A
- US 20030119663 A
- WO 0180994 A


### In der Beschreibung aufgeführte Nicht-Patentliteratur


- **Q. GAO**. *Macromolecular Chemistry and Physics*, 2013, vol. 214 (15), 1677-1687
- **J. WANG**. *Journal of Applied Polymer Science*, 2013, vol. 128 (4), 2408-2413
- **H. DECHER**. *nutzen gemäß Polymer International*, 1995, vol. 38 (3), 219-225